# FASCICULE DE BREVET EUROPEEN

(11) **EP 2 002 753 B1**
(45) Date de publication et mention de la délivrance du brevet: **06.07.2016**
(21) Numéro de dépôt: 08290504.3
(22) Date de dépôt: 02.06.2008
(51) Int. Cl.: B29C 45/34, A46B 1/00, A46B 9/02, A46B 9/04, A46D 3/00, B29C 33/30, B29C 45/00, B29C 45/26

(54) **Procédé et outillage d'obtention d'un dispositif de brossage et de peignage de précision**
Verfahren und Arbeitsgerät für eine Vorrichtung zum Präzisionsbürsten und -kämmen
Method and tools for obtaining a device for precision brushing and combing

(30) Priorité: 15.06.2007 FR 0755794
(43) Date de publication de la demande: 17.12.2008
(73) Titulaire: Cinqpats, 91470 Limours (FR)
(72) Inventeur: Mathiez, Jean-Louis, 91470 Limours (FR)
(74) Mandataire: Derambure, Christian

(56) Documents cités:
- EP-A- 0 295 900
- EP-A- 1 306 029
- EP-A- 1 752 067
- EP-A- 1 785 056
- WO-A-02/03831
- WO-A-03/059594
- WO-A-2007/043848
- CH-A- 401 903
- DE-U1- 29 700 611
- FR-A- 952 303

## Description

L'invention se rapporte à un procédé d'obtention et un outillage de réalisation d'un dispositif de brossage et de peignage de précision comportant une pluralité de poils de section réduite à savoir sensiblement inférieure à 1mm, formée sur un support, tige ou plaque, par moulage de matière plastique, comportant des pavés de moulage réalisés selon un procédé particulier.

On entend par peignage l'opération consistant à peigner ou démêler tout type de poil ou fibre.

Le dispositif est destiné au nettoyage ou traitement de toute surface, notamment au brossage des dents, à l'hygiène en général, aux soins du corps ou au maquillage.

Il est particulièrement adapté au nettoyage de surfaces délicates comme les parties du corps humain, la peau, les dents, les cheveux ou les cils, sans risque de blessure ainsi que pour des objets fragiles comme les bijoux, les étoffes ou les appareils électroniques sans risqué de détérioration. Ce dispositif est aussi adapté à l'application d'une dose précise d'un produit liquide ou pâteux pour le nettoyage, le traitement ou à la décoration de ces surfaces fragiles.

Dans le cadre de l'invention, le terme « poils » signifie des excroissances implantées sur un axe sensiblement au droit de la surface d'un support, ayant une section transversale faible par rapport à leur longueur d'extension le long dudit axe, au moins d'un facteur dix. Lorsque les poils sont rigides du fait de leur configuration ou leur matière, le terme de « dents » est en général utilisé.

Pour un brossage ou peignage dit de « précision », les poils de faible section transversale sont considérés comme ayant une évolution de section régulière sur la majeure partie de leur longueur. Ce terme sous-tend également une grande précision dimensionnelle et géométrique, ainsi qu'une disposition des poils selon un motif régulier et reproductible, sans défauts ni éléments piquants ou coupants qui risqueraient de blesser l'usager ou d'endommager une surface.

De manière générale, il existe une grande variété de dispositifs de brossage et de peignage qui peuvent êtres classés selon les trois grandes catégories suivantes.

Une première catégorie recouvre les brosses à poils implantés comme les brosses à dents, les brosses à cheveux, les pinceaux et les balais. Elles sont constituées d'un manche support en bois, métal ou plastique, comportant un grand nombre de poils disposés par groupes de poils ou « touffes ».

Le procédé de fabrication consiste à piquer des touffes de poils en matière souple, par exemple des fibres de Polyamide extrudées (Nylon®) dans des trous pratiqués dans le manche support. Avant le piquage, les touffes de poils sont en général pliées en deux et liées par une petite agrafe métallique qui assure une liaison solide dans le trou. Dans les cas ou l'agrafage ne convient pas, de la colle peut être ajoutée dans la zone d'assemblage. Il est aussi souvent nécessaire d'égaliser la surface formée par l'extrémité des poils par passage d'un outil de coupe ou tondeuse.

Ce procédé est lent et coûteux puisque les touffes de poils sont implantées une par une, successivement par une machine. Une production de masse nécessite beaucoup de main d'oeuvre ou de nombreuses machines automatiques ainsi que des appareils de contrôles perfectionnés pour vérifier que la brosse est complète et sans défauts.

À l'utilisation, ces brosses sont efficaces pour frotter, nettoyer ou appliquer un produit liquide comme de la peinture ou du vernis, mais ne conviennent pas pour peigner de façon précise parce que les poils sont serrés entre eux dans les touffes et laissent difficilement entrer les fibres à séparer. De plus, l'ensemble n'est pas homogène puisque les poils sont plus serrés au milieu de chaque touffe que sur la périphérie et les espaces vides entre chaque touffe créent des discontinuités.

Les divers matériaux utilisés pour constituer le manche, les poils, l'agrafe ou la colle rendent difficile le recyclage d'une telle brosse en fin d'utilisation.

Les brosses torsadées constituent une deuxième catégorie. Elles ont en général une forme cylindrique ou conique, comme les goupillons de nettoyage et les brosses pour l'application de mascara sur les cils.

Le procédé de fabrication de ces brosses torsadées consiste à insérer une pluralité de fibres de matière plastique souples par exemple des fibres de Polyamide extrudées (Nylon®) entre les deux brins d'un fil d'acier replié sur lui-même en forme d'épingle puis à torsader l'ensemble en le tenant par les deux extrémités, de façon à emprisonner les fibres en générant une forme hélice. Il faut ensuite couper l'extrémité des poils pour égaliser la forme de l'enveloppe extérieure et sectionner le fil métallique à la bonne longueur. Pour l'assemblage final sur un manche ou une tige en matière plastique, il faut chauffer à rouge l'extrémité du fil métallique torsadé et lé planter dans un petit orifice du manche ou de la tige.

Ce procédé est lent et difficile à mettre en oeuvre car il est composé d'une succession d'opérations délicates à reproduire unitairement sur chaque brosse. Le nombre de poils et leur rigidité peuvent varier sensiblement en cours de production, la résilience du fil métallique et son élasticité peuvent influer sur la forme de la torsade, l'usure des outils de coupe chargés d'égaliser l'extrémité des poils induit aussi des variations et un risque de poils non coupés. Les variations de température et l'encrassement dû à la poussière ont aussi un effet négatif sur la constance de la production. Il faut donc des machines très perfectionnées et une surveillance tout au long de la production pour ajuster les réglages et éviter les dérives. En pratique, la complexité de ce procédé de fabrication et les variations qui en découlent ne permettent pas d'obtenir des brosses rigoureusement identiques. Les variations sont dimensionnelles (tolérance courante de ± 0,4 mm sur le diamètre d'une petite brosse, soit ± 5 %), mais aussi en nombre de poils (tolérance courante de ± 10%). La disposition des poils le long de l'hélice torsadée peut aussi subir des variations importantes selon les réglages de la machine qui produisent un écrasement des fibres au point d'emprisonnement dans l'épingle métallique et une dispersion plus ou moins forte.

A l'utilisation, ces brosses sont efficaces pour frotter, nettoyer ou appliquer un produit pâteux comme du mascara, mais ne conviennent pas pour une utilisation précise et délicate du fait des variations induites par le procédé de fabrication. Les performances de peignage d'une telle brosse sont médiocres parce que la répartition des poils en spirale ne peut produire une espacement régulier entre les poils.

Les divers matériaux utilisés pour constituer le manche, le fil torsadé et les poils rendent difficile le recyclage d'une telle brosse en fin d'utilisation.

Il existe encore, dans une troisième catégorie, des brosses intégralement moulées en matière plastique qui ont, pour caractéristique principale, une continuité de matière entre au moins une partie du support et les poils. Elles peuvent présenter des configurations assez variées incluant les peignes à cheveux, certaines brosses à habits et certains applicateurs pour mascara.

Le procédé de fabrication des brosses moulées consiste à réaliser un moule en acier dont les cavités internes ont un contour spécialement adapté a la formation d'une géométrie de brosse. De la matière plastique fondue est injectée sous pression, en une ou plusieurs fois dans le nioule, suivant des méthodes connues, pour former le support et les poils. Après solidification de la matière plastique, le moule est ouvert par déplacement d'au moins une de ses parties, et la brosse est extraite par la poussée de tiges ou de plaques mobiles d'éjection.

Ce procédé permet de réaliser des brosses à faibles coûts avec une grande régularité puisque la forme dépend essentiellement de la qualité d'exécution du moule. Il permet d'obtenir des brosses de différentes duretés avec un même moule, en fonction du choix de matière. Par exemple une matière dure comme l'acétate de cellulose sera utilisée pour produire une brosse rigide qui sera appelée « peigne » lorsqu'elle présente seulement une ou deux rangées de poils alignés sur un support plat ou légèrement courbé. Avec une matière souple comme un élastomère thermoplastique (TPE), le même moule permettra de produire une brosse plus douce pour le brossage de textiles par exemple.

L'inconvénient majeur de ces dernières brosses est une configuration relativement grossière avec des poils relativement gros, coniques et peu flexibles qui n'autorisent pas un brossage ou peignage délicat et précis. Il est en effet impossible d'obtenir par moulage des poils aussi fins que les fibres obtenues par extrusion et étirage comme dans les autres catégories de brosses décrites précédemment.

Ce manque de finesse est autant dû aux limitations connues de l'homme du métier dans l'exécution des moules métalliques pour injection, qu'aux limitations techniques des procédés d'injection de matières thermoplastiques. Voici une liste non exhaustive de ces limitations.

Les méthodes traditionnelles d'enlèvement de métal pour percer les très fines cavités correspondant au formage des poils dans le moule souffrent d'un manque de précision et ne permettent pas d'obtenir un état de surface parfaitement lisse. Le perçage ou fraisage laisse des stries, et le procédé d'électroérosion par enfoncement d'électrode laisse une multitude de petits cratères qui seront, a cette petite échelle, très dommageables au moulage. Il est aussi très difficile de polir une multiplicité de petites cavités.

De plus, les cloisons de séparation entre ces cavités ne peuvent être très fines sans risquer de fragiliser le moule. Il en découle une distance entre deux poils qui n'est pas aussi petite que l'on pourrait le souhaiter pour un peignage de précision.

Lors de l'opération d'injection de matière dans le moule, 3 phénomènes simultanés s'opposent au remplissage complet des cavités formant les poils dans le moule :
1) les pertes de charges liées à la viscosité de la matière liquide et au frottement sur la surface du moule sont d'autant plus importantes que la cavité est étroite ;
2) le refroidissement de la matière par contact avec le métal du moule tend à faire chuter sa fluidité et de la figer prématurément ; et
3) l'air naturellement présent dans la cavité a tendance à se comprimer en fond de cavité lors du remplissage du moule par la matière fondue, provoquant un échauffement pouvant aller jusqu'à brûler la surface exposée de la matière. Il en résulte une pièce incomplète et noircie, et des dépôts de carbone qui s'accumulent sur les surfaces fonctionnelles du moule, détériorant progressivement la qualité de la production.

Lors de la sortie de la pièce moulée du moule après solidification de la matière, opération communément appelée « éjection », toute imperfection où rugosité à la surface de la cavité moulante du poil tendra à retenir tout ou partie de ce poil dans la cavité en risquant de le déformer ou de le casser. Un poil cassé dans la cavité rendra celle-ci partiellement ou totalement inutilisable et imposera un démontage long et coûteux pour nettoyage.

Pour parvenir à former les poils dans leur intégralité, il convient de fabriquer un moule avec beaucoup de « dépouille », c'est-à-dire présentant des sections de passage de matière les plus grandes possible à l'entrée des cavités de poils, et se rétrécissant continuellement jusqu'à l'extrémité du poil. Il conviendrait également de pratiquer des fuites d'air sur toutes les surfaces de jointure du moule, parfois sur toute la longueur du poil. De cette façon, la matière fondue garde suffisamment de pression pour alimenter l'extrémité du poil, l'air s'échappe au fur et à mesure de l'avancée de la matière, et le poil sera suffisamment résistant pour vaincre les forces d'adhérence sur la surface du moule à l'éjection.

Ainsi, le brevet EP 1 161 159 tente de résoudre les difficultés de moulage d'une brosse par injection en revendiquant une forme de poils coniques. Cette proposition va à l'encontre de l'obtention d'une brosse de précision car la forme conique augmente la section de l'embase du poil, ce qui réduit sa souplesse et augmente la distance d'entraxe de deux poils consécutifs.

Par ailleurs, le document US 2003/0163884 décrit un procédé original d'injection de poils à travers des orifices pratiqués dans un manche support. Ce procédé nécessite de mouler le manche support avec des orifices précis, avant de mouler les poils dans une seconde opération d'injection, ce qui ralentit la production et augmente les coûts, surtout pour des brosses de petites dimensions, qui ne nécessitent pas de manche moulé dans un autre matériau. De plus, cette technologie impose une distance entre les poils relativement importante car les orifices du support doivent avoir des contours suffisamment épais pour pouvoir résister à la seconde injection de formation des poils. Pour ces raisons, cette invention ne permet pas de réaliser une brosse de précision à faible coût. WO 02/03831 décrit aussi un procédé d'injection de poils.

En outre, le brevet US 6 732 398 décrit un poil de configuration étagée pour brosse à dents, présentant plusieurs parties de diamètres de plus en plus petits lorsqu'on se rapproche de l'extrémité fibre du poil. Cette configuration permet de faciliter le remplissage de matière ainsi que le démoulage au cas où le procédé d'injection est utilisé pour sa production. Cependant cette configuration a les mêmes effets négatifs pour l'obtention d'une brosse de précision que la forme conique.

Il est également connu des documents EP 1 070 465, EP 1 070 466 et EP 1 070 467 des peignes en plastique injecté comportant des successions de dents décalées alternativement de part et d'autre d'une surface géométrique de séparation. Suivant cette configuration, à condition de faire coïncider le plan de joint du moule avec la surface de séparation, il est possible de former chaque rangée de dents dans une plaque différente du moule, avec un pas double de celui du peigne obtenu finalement par la juxtaposition des deux rangées. Bien que performants, ces dispositifs ont l'inconvénient de présenter des angles vifs en bordure des dents et une extrémité pointue qui peuvent blesser l'utilisateur, ou au moins lui suggérer une notion de danger, tout particulièrement pour une utilisation cosmétique sur le visage, à proximité des yeux.

De plus, le brevet US 4 422 986 décrit une méthode pour produire une brosse par injection de matière plastique de façon à ce que les poils soient formés entre deux parties juxtaposées d'un moule. Afin de démouler la brosse après solidification de la matière, les parties du moule sont séparées et une tige d'éjection est actionnée. Selon la description du moule, au moins une partie des poils est formée entre deux parties du moule mobiles l'une par rapport à l'autre pendant les phases d'ouverture et d'éjection.

La répétitivité du mouvement à chaque cycle provoque inévitablement une usure de surface des parties mobiles, ce qui produit après une utilisation prolongée, de petits interstices dans lesquels la matière entrera, provoquant des bavures en bordure des poils, variables en fonction des paramètres de température et de pression. Par ailleurs l'évacuation de l'air présent dans l'empreinte avant remplissage n'étant pas canalisée, elle se fait automatiquement par les interstices entre les parties constituant les parties moulantes des poils, de façon plus ou moins efficace selon l'usure et l'échauffement du moule.

Sur un moule multi empreintes, il est connu que la température peut varier tout au long d'une période de production, sur l'ensemble du moule, on sur une partie seulement du moule, ou même sur une seule empreinte. Un même flux de matière fondue étant injecté dans l'ensemble du moule, il en résulte une grande difficulté pour ajuster une pression suffisante à pousser la matière jusqu'au bout de chacun des poils sur chacune des empreintes sans provoquer l'apparition de bavure sur l'un quelconque des poils.

Les bavures de moulage sur les poils sont tout à fait dommageables à un brossage ou peignage de précision. En effet, ces bavures peuvent, selon l'utilisation dédiée au dispositif :
- boucher complètement l'intervalle entre deux dents par un « voile » de matière plastique, réduisant de ce fait l'efficacité du dispositif ;
- former une frange de matière fine et parfois coupante qui pourrait blesser la peau de l'utilisateur, ou
- sectionner une partie des cheveux ou les cils peignés.

Malgré la bonne maîtrise de certaines des technologies évoquées ci-dessus, l'état de la technique ne permet pas de réaliser industriellement des dispositifs de brossage ou de peignage de précision simple et à faible coût.

L'invention vise à remédier aux inconvénients de l'état de la technique décrit ci-dessus en proposant un procédé d'obtention d'un dispositif de brossage et de peignage de précision, permettant une exécution fine, régulière et sans défauts et pouvant être produit industriellement de manière simple et à faible coût. Pour ce faire, l'invention prévoit une structure géométrique de poil ajustée avec précision en distance et en angle par rapport à une référence, ainsi qu'en dimension ; cette structure peut être obtenue en particulier par une mise en oeuvre appropriée de l'électroérosion filaire.

Plus précisément, la présente invention a pour objet un outillage d'injection de matière plastique selon la revendication 1 et un procédé pour réaliser un dispositif de brossage ou de peingnage selon la revendication 5.

Dans ces conditions, le dispositif de brossage ou le peignage est suffisamment précis et régulier pour être utilisé sur des surfaces délicates et il est aussi adapté à l'application d'une dose précise d'un produit liquide ou pâteux pour le nettoyage, le traitement ou à la décoration de toute surface fragile.

Selon des modes de réalisation particuliers de ce dispositif de brossage ou de peignage:
- la pluralité de poils ainsi qu'une partie du support sont formés par injection d'une matière thermoplastique choisie parmi les polyéthylènes (PE), les polypropylènes (PP), les polyoxyméthylènes (POM), les polyamides (PA), les polyesters (PET, PCTA, PETG, etc...) les élastomères (TPE) ou les silicones (SI) ;
- la portion principale des poils présente une section transversale définie par une formé géométrique ronde, elliptique, rectangulaire, carrée, en losange, en croix trilobée ou quadrilobée, en demi-lune par exemple;
- la portion principale des poils présente une section transversale évolutive, passant progressivement d'une des formes de section décrites précédemment dans la zone proche de l'embase à une autre des formes de section dans la zone proche de l'extrémité libre du poil ;
- les poils sont reliés au support par une embase évasée ayant une forme de révolution autour de l'axe de la portion principale, de génératrice droite ou courbe, le volume résultant étant un cône, ou un tronc de tore, convexe ou concave ;
- les poils sont reliés au support par une embase évasée ayant une forme évolutive autour de l'axe de la portion principale, de génératrice droite ou courbe, le volume résultant pouvant être un cône aplati latéralement ou un volume s'élargissant en direction du support ;
- la portion principale des poils présente une extrémité libre plane perpendiculaire ou inclinée par rapport à l'axe de la portion principale ;
- la portion principale des poils a une extrémité libre matérialisée par une surface courbe d'enveloppe cylindrique, concave ou convexe, d'axe sensiblement perpendiculaire et centré par rapport à l'axe de là portion principale ;
- la portion principale des poils a une extrémité libre matérialisée par une surface courbe d'enveloppe cylindrique concave, d'axe sensiblement perpendiculaire à l'axe de la portion principale mais décentré de façon à former une pointe ;
- la pluralité de poils est formée en une rangée disposée sur un support, par exemple allongé, plat, cylindrique ou prismatique, les axes des portions principales étant sensiblement parallèles et la distance entre deux poils adjacents étant sensiblement constante ;
- la pluralité de poils est formée en plusieurs rangées parallèles disposées sur un support plat rattaché à un manche destiné à la prise en main ;
- la pluralité de poils est formée en plusieurs rangées non parallèles disposées sur un support plat rattaché à un manche destiné à la prise en main ;
- la pluralité de poils est formée en plusieurs rangées parallèles ou non parallèles disposées sur un support rattaché à une tige, elle-même rattachée à l'organe de fermeture d'un récipient ;
- la pluralité de poils est formée sur plusieurs faces d'un support prismatique ;
- la pluralité de poils est formée en rangées disposées radialement autour d'un support en forme de tige cylindrique ou conique ;
- le support de la pluralité de poils est dans le prolongement axial de la tige;
- le support de la pluralité de poils est décalé angulairement par rapport à la tige.

Un autre aspect se rapporte à un conditionnement comportant un dispositif de brossage ou de peignage de précision lié à une tige, immergé dans un récipient contenant une composition pâteuse. Le récipient comporte une ouverture rétrécie, qui est obturée par une capsule rattachée à la tige. Lors de l'ouverture, le dispositif est essuyé en passant par l'ouverture rétrécie du récipient, éventuellement équipé d'un organe souple permettant de doser la quantité de composition pâteuse laissée dans les interstices entre les poils. L'ensemble étant destiné au maquillage des cils ou des sourcils, de type conditionnement de mascara.

Le procédé d'obtention d'un dispositif de brossage ou de peignage de précision tel que décrit ci-dessus consiste à injecter une matière plastique dans un moule métallique, en remplissant d'abord une cavité formant support, puis de multiples cavités formant les poils, en chassant l'air par des évents localisés à l'extrémité de chaque cavité formant un poil.

En particulier, l'invention se rapporte à un outillage d'injection de matière plastique de mise en oeuvre du procédé apte à produire un dispositif de brossage ou de peignage de précision tel que décrit ci-dessus, comportant au moins un pavé dans lequel sont creusées des cavités aptes à mouler la pluralité de poils.

Le pavé est constitué de plusieurs plaques d'acier assemblées de façon permanente pendant l'utilisation du moule et démontable périodiquement pour nettoyage et entretien.

Le pavé comporte au moins une rangée de cavités destinées chacune à former la partie principale d'un poil, usinée de part et d'autre de la surface séparant deux plaques adjacentes.

Un élément d'obturation, en forme de plaque ou de barre, est disposé à l'extrémité d'au moins une rangée de cavités, pour former la surface d'extrémité libre des poils.

Un espace d'épaisseur calibrée entre 0,005 mm et 0,050 mm est ménagé entre les plaques formant la portion principale du poil et la plaque ou barre formant la surface d'extrémité libre du poil, de façon à laisser échapper l'air présent dans la cavité au moment de l'injection tout en évitant la fuite du plastique.

L'outillage comporte un mécanisme d'éjection pour extraire le dispositif de la cavité après solidification de la matière plastique en exerçant une poussée sur le support parallèlement à l'axe principal d'au moins une partie de la pluralité de poils.

L'acier constituant les plaques du pavé est choisi pour sa grande dureté, de préférence supérieure à 50 HRc, comme par exemple de l'acier spécial pour outil avec traitement thermique.

La dureté de l'acier n'autorisant pas un usinage classique par enlèvement de copeaux, les plaques du pavé sont mises en forme par un procédé d'électroérosion ou plus précisément en ce qui concerne les cavités destinées à former la surface interne des cavités correspondant au moulage de la portion principale des poils, par électroérosion filaire. Ce procédé utilise un fil de métal conducteur de courant en tant qu'électrode pour découper une pièce d'acier. L'équipement complet est connu de l'homme du métier et comporte une machine apte à dérouler le fil au fur et à mesure de son usure, à contrôler la tension et l'inclinaison du fil pour orienter la zone coupée suivant un angle, et de déplacer une table sur laquelle la pièce est fixée, afin de décrire le parcours de découpe voulu.

De façon optimisée, plusieurs plaques constituant un pavé, sont usinées par électroérosion dans un même bloc d'acier, de façon à assurer un positionnement précis de toutes les microcavités constituant au moins une partie de la pluralité de poils.

Les opérations successives d'un procédé particulier pour réaliser un pavé peuvent se dérouler avantageusement de la façon suivante :
- ébauche extérieure d'un bloc d'acier pour obtenir au moins une face de référence,
- forage d'au moins un trou transperçant le bloc par enfonçage afin de permettre le passage du fil de découpe,
- découpe d'ébauche pour s'approcher rapidement du profil voulu, avec un fil de diamètre 0,3mm par exemple,
- passages successifs de finition, avec un fil de plus en plus fin, de diamètre 0,15 mm et 0,07 mm à titre d'exemple non limitatif, jusqu'à l'obtention d'une bonne qualité de surface dans les cavités et sur les autres surfaces fonctionnelles découpées,
- reprise en électroérosion des portions de surfaces constituant les embases évasées des poils,
- tranchage du bloc pour séparer les plaques,
- reprise en électroérosion filaire ou en électroérosion d'enfonçage classique de divers surfaçages et perçages nécessaires à l'éventation des cavités, à l'éjection de la pièce moulée et à la fixation du pavé, et
- assemblage du pavé et intégration dans une carcasse d'acier comportant des parties moulantes complémentaires à celles du pavé pour former un dispositif complet avec un support, une tige ou une poignée.

L'éventation, ou fuite d'air volontairement localisée selon l'invention à l'extrémité libre de chaque poil est avantageusement obtenue par une plaque obturant la totalité des cavités d'un pavé, avec un, jeu calibré par un calage d'épaisseur ajouté, ou intégré « dans la masses Dans ce cas, la totalité des extrémités libres de la rangée ou du groupe de rangées de poils est géométriquement disposée dans un plan, perpendiculaire à l'axe principal des poils, ou avec un angle. Dans certains cas, il est avantageux d'utiliser des barrettes d'éventation disposées sans le pavé de façon à obturer chacune une rangée de cavités. En fonction de la géométrie de la barrette, de sa section polygonale, courbe ou circulaire, il est aisé de donner une forme complexe à l'extrémité libre du poil, et au besoin de décaler une rangée de poils en longueur par rapport aux rangées adjacentes. Les barrettes, démontables et remplaçables, sont insérées dans des logements pratiqués de part et d'autre de la surface. séparant deux plaques adjacentes d'un pavé, perpendiculairement à l'axe principal d'au moins une partie des poils, ou avec un angle. La section des logements est volontairement plus grande que la section des barrettes de façon à ménager le jeu calibré nécessaire à l'éventation.

Le mécanisme d'éjection est classiquement un ensemble de tiges coulissantes sensiblement parallèles à l'axe principal dé la majorité des poils et actionnées par un système mécanique ou hydraulique qui exerce une poussée sur le support du dispositif de brossage ou de peignage après solidification de la matière thermoplastique, afin d'extraire les poils de leurs cavités sans les rompre ni les déformer.

Sur un outillage selon l'invention, les tiges coulissantes ont avantageusement la forme de lames disposées parallèlement à certaines rangées de poils de façon à pousser sur la petite bordure périphérique du support. Les évents situés à proximité de l'extrémité libre des poils jouent aussi un rôle à l'éjection en laissant entrer de l'air dans les cavités de poils et évitant une création de vide qui retiendrait les poils par succion dans les cavités

Dans le cas d'un moule pour dispositif comportant plusieurs groupes de rangées de poils, il convient de retenir la pièce du côté du moule comportant le mécanisme d'éjection, afin que ceux-ci puissent opérer correctement. Les moyens de retenue sont en général des formes créées volontairement en contre dépouille du côté où l'on veut retenir la pièce moulée.

La fixation entre elles des plaques constituant un pavé est particulièrement délicate en raison des petites dimensions de l'ensemble et de l'encombrement des mécanismes d'éjection et des plaques ou barrettes d'éventation.

Selon l'invention, le système est constitué de plusieurs vis transversales pour maintenir serrées les plaques de chaque pavé. La tête chaque vis est noyée dans un lamage pratiqué dans une plaque d'extrémité du pavé, et le filetage est directement vissé dans un taraudage pratiqué dans la plaque située à l'autre extrémité du pavé. Des éléments de centrage, pions et barrettes garantissent avantageusement un bon positionnement des plaques les unes par rapport aux autres, même en cas de démontage pour nettoyage.

La fixation des pavés sur une plaque porte empreinte du moule s'effectue aussi avantageusement au moyen de vis disposées de façon à pouvoir, être retirées « moule ouvert », sans démontage de la carcasse du moule.

L'invention se rapporte également aux opérations de finition du procédé de réalisation qui peuvent être pratiquées complémentairement sur le dispositif de brossage ou de peignage après moulage et éjection du moule afin de lui donner des caractéristiques originales et avantageuses, par exemple l'effilage, le brûlage ou la courbure.

Parmi ces opérations de finition, l'effilage consiste à amincir progressivement l'extrémité libre des poils par enlèvement de matière et ainsi obtenir une souplesse de poils comparable à celle des poils naturels ou de certaines fibres synthétiques extrudées. La pointe d'un poil naturel utilisé en brosserie traditionnelle, ou « fleur du poil », a une section transversale nettement inférieure à 0,1mm, voir à 0,01 mm et il n'est pas possible avec les technologies actuelles de réaliser une telle finesse directement par moulage de matière thermoplastique. L'effilage peut être pratiqués mécaniquement ou chimiquement, selon le type de matière thermoplastique utilisé.

L'effilage mécanique, qui convient bien à certaines matières telles que le Polyoxyméthylène (POM) ou le Polyamide (PA), consiste à enlever de la matière sur le coté de la portion principale d'au moins une partie des poils, progressivement et de plus en plus lorsqu'on s'approche de l'extrémité libre due ces poils, par frottement sur une surface abrasive, un disque, une meule ou une bande.

De préférence, il convient d'exercer un effort entre la surface abrasive et les poils de façon à les fléchir progressivement en exposant une partie de la portion principale a l'enlèvement de matière.

L'effort exercé, ainsi qu'un ou plusieurs mouvements relatifs entre le dispositif de brossage ou de peignage et la surface abrasive sont déterminants pour enlever exactement la quantité de matière voulue sur les poils.

La forme de la pointe effilée dépend des mouvements relatifs de translation appliqués, ainsi :
- un mouvement dans une direction permet de tailler un biseau simple sur les poils exposés,
- un mouvement dans deux directions de façon à tailler un biseau double sur les poils exposés,
- un mouvement dans de multiples directions de façon à tailler les poils exposés en pointe, de section polygonale, ou sensiblement conique

L'effilage chimique est praticable sur les matières thermoplastiques comme le polyamide (PA), le polypropylène (PP), le polyesther (PET), le polybutylene terephtalate (PBT) ou des élastomères (TPE) pouvant être dissoutes par des solvants liquides comme par exemple le méthylbenzène (Toluène), le di-méthylbenzène (Xylène) ou une solution aqueuse concentrée en phénol, en acide formique ou en acide phosphorique. Le trempage des poils dans un solvant choisi, comme l'acide phosphorique pour le polyamide, permet de dissoudre la matière plastique constituant lesdits poils et de ce fait les amincir dans la zone proche de leur extrémité.

De préférence, le trempage de l'extrémité des poils dans le solvant liquide se fait dans un mouvement de translation verticale, de direction sensiblement parallèle à l'axe principal de la majorité des poils et de vitesse réglée de façon à exposer l'extrémité libre des poils pendant un temps suffisant pour obtenir une pointe fine et progressive. Un déplacement soutenu du solvant est assuré par un dispositif de pompage ou d'agitation de façon à renouveler le liquide en contact avec la surface des poils et à extraire la matière plastique dissoute. Cette opération est suivie d'un rinçage et d'un séchage pour neutraliser les effets chimiques du solvant.

Le brûlage est autre opération de finition consistant à former de petites excroissances approximativement sphériques à l'extrémité d'au moins une partie des poils pour donner des caractéristiques fonctionnelles différentes au dispositif de brossage ou de peignage. Le procédé consiste à exposer l'extrémité d'au moins une partie des poils à une source de chaleur vive jusqu'à la fusion locale de la matière thermoplastique et formation d'une goutte au bout de chaque poil, et à la laisser refroidir. Cette opération produit l'effet, inverse de l'effilage, puisque les extrémités libres des poils sont grossies au lieu d'être amincies.

Un dispositif ainsi traité conviendra pour les brossages ou peignages de surfaces particulièrement fragiles ou délicates, en évitant des rayures ou blessures que pourraient provoquer des extrémités libres de poils non arrondies.

Pratiquement, le brûlage des extrémités libres des poils peut être effectué par le passage rapide d'une flamme, par le soufflage d'air chaud, ou par l'exposition d'un panneau générateur de rayons infrarouges. Dans tous les cas, il convient de doser l'intensité de l'énergie fournie et la durée de l'exposition pour former des excroissances de la taille voulue, sans risque de soudure entre des poils adjacents.

La courbure est une autre opération de finition qui consiste à déformer le support du dispositif de brossage ou de peignage pour donner un angle de convergence ou de divergence à la pluralité de poils constituant au moins une rangée. Il est ainsi possible selon l'invention de produire un dispositif comportant une pluralité de poils dont les axes principaux sont tous parallèles entre eux et de donner un angle entre les poils adjacents par une opération de courbure du support postérieure aux opérations de moulage et de démoulage. Ce procédé permet d'éviter la réalisation d'un moule spécifique pour un dispositif courbe.

Selon l'invention, un angle de divergence est obtenu en courbant le support avec les poils à l'extérieur du rayon de courbure. La divergence permet d'éloigner les extrémités libres des poils adjacents tout en conservant un pas mesuré à l'embase des poils proche du pas avant courbure. Ceci permet une utilisation plus rapide du dispositif de peignage du fait de la plus grande ouverture entre les poils.

Selon l'invention, un angle de convergence est obtenu en courbant le support avec les poils à l'intérieur du rayon de courbure. La convergence permet de resserrer les extrémités libres des poils adjacents tout en conservant un pas mesuré à l'embase des poils proche du pas avant courbure. Ceci permet une utilisation plus précise du dispositif de peignage du fait de la plus petite ouverture entre les poils.

il est possible d'obtenir sur un même dispositif, des zones en convergence et des zones en divergence en pratiquant plusieurs rayons de courbures alternés.

Un dispositif comportant deux groupes de poils de part et d'autre d'un support présente après courbure à la fois un groupe en divergence à l'extérieur du rayon de courbure et un groupe en convergence à l'intérieur du rayon de courbure.

Il est aussi possible de pratiquer la courbure après une autre opération de finition, telle que l'effilage ou le brûlage.

Plus particulièrement, la courbure est avantageusement pratiquée en pinçant le support de la pluralité de poils entre deux mâchoires complémentaires de façon à le plier au-delà de sa limite élastique et conserver une déformation résiduelle.

La courbure peut avoir une faible déformation, avec un grand rayon (par exemple de 50 à 100 mm) formant un galbe ou avec un faible rayon (par exemple de 5 à 10 mm) en liaison avec un angle de convergence approprié, ou une forte déformation avec un grand rayon (galbe) ou avec un faible rayon (permettant un pliage jusqu'à 180°).

La courbure peut être effectuée directement après le moulage, lorsque la pièce est encore chaude, ou ultérieurement, lorsqu'elle est totalement refroidie.

Lorsque le dispositif de brossage ou de peignage est moulé dans une matière élastique comme un élastomère (TPE), ou à faible mémoire comme un polyoléfine (PP ou PE), la déformation résiduelle après courbure mécanique risque d'être nulle, mais risque également d'être faible ou irrégulière. Selon l'invention, il convient en ce cas d'apporter de l'énergie thermique sur le support avant ou pendant le pincement par les mâchoires, de façon à le ramollir suffisamment pour marquer la courbure. L'énergie thermique. peut par exemple être apportée par soufflage d'air chaud, ou par chauffage des mâchoires avec une résistance électrique. Une autre méthode rapide et fiable pour garantir la déformation résiduelle de certains matériaux est l'application d'ultrasons au moment du pincement. Dans ce cas, l'une des mâchoires est changée en sonotrode, reliée à une source d'énergie ultrasonore.

De façon avantageuse, il est possible de pratiquer plusieurs opérations de finition sur un même dispositif de brossage ou de peignage :
- un effilage suivi d'un brûlage permet d'obtenir des poils avec des extrémités flexibles car amincis progressivement et non agressives car terminées par de petits renflements de matière fondue ;
- un effilage suivi d'une courbure divergente ou convergente permet d'avoir un maximum d'ouverture entre les poils pour un meilleur peignage;
- on effilage suivi d'un brûlage, suivi d'une courbure permet de cumuler les avantages des différents procédés.

D'autres caractéristiques et avantages de l'invention apparaîtront à la lecture de la description détaillée qui suit, se rapportant à des exemples non limitatifs, en référence aux figures annexées qui représentent, respectivement :
- la figure 1, une vue schématique en perspective d'une brosse à poils implantés, selon l'art antérieur;
- la figure 2, une vue schématique en perspective d'une brosse torsadée, selon l'art antérieur;
- la figure 3, une vue partielle en perspective d'un outillage destiné à produire une brosse intégralement moulée en matière plastique, selon l'art antérieur;
- les figures 4 à 6, des représentations perspectives schématiques d'un poil pour dispositif de brossage et de peignage réalisé par un procédé selon l'invention ;
- les figures 7 à 11, des vues schématiques en perspective de différentes formes de portion principale d'un poil pour dispositif de brossage et de peignag réalisé par un procédé selon l'invention ;
- les figures 12 à 15, des vues schématiques en perspective de différentes formes de l'embase d'un poil pour dispositif de brossage et de peignage réalisé par un procédé selon l'invention;
- les figures 16 à 20, des vues schématiques en perspective de différentes formes de l'extrémité libre d'un poil pour dispositif de brossage et de peignage réalisé par un procédé selon l'invention;
- les figures 21a. à 21c et 22, des vues de détail d'un cas particulier de poil à géométrie évolutive pour dispositif de brossage et de peignage réalisé par un procédé selon l'invention;
- les figures 23 à 26a et 26b, des vues schématiques en perspective de différentes configurations de rangées de poils pour dispositif de brossage et de peignage réalisé par un procédé selon l'invention;
- les figures 27, 28a, 28b, 29a et 29b, des vues schématiques perspective ou supérieures de différentes configurations de groupes de rangées de poils pour dispositif de brossage et de peignage selon l'invention;
- les figures 30a à 30d, des vues schématiques en perspective d'un dispositif de brossage et de peignage réalisé par un procédé selon l'invention comportant des rangées de poils non parallèles entre elles ;
- les figures 31a à 31d, des vues schématiques en perspective d'un dispositif de brossage et de peignage réalisé par un procédé selon l'invention dont la tige support est angulairement inclinée;
- les figures 32a à 32c, des vues schématiques en perspective d'une brosse à dents comportant des poils réalisé par un procédé selon l'invention;
- les figures 33a à 33e et 34a à 34c, des vues schématiques et partielle (figure 34c) en perspective d'un applicateur de produit cosmétique sur les cils comportant un dispositif de brossage et de peignage réalisé par un procédé selon l'invention;
- les figures 35 à 37, des vues schématiques, en coupes partielles, d'un conditionnement comportant un dispositif de brossage et de peignage réalisé par un procédé selon l'invention destiné au maquillage des cils ;
- les figures 38a à 38c et 39a à 39c, des vues schématiques en perspective d'un dispositif de brossage et de peignage réalisé par un procédé selon l'invention configuré en forme de pinceau;
- la figure 40, une vue schématique montrant le principe d'usinage. d'un élément de moule destiné à produire un dispositif de brossage et de peignage réalisé par un procédé selon l'invention ;
- les figures 41 a à 41e, des vues schématiques en perspective éclatée montrant les différentes étapes de réalisation d'un pavé de moule destiné a produire un dispositif de brossage et de peignage réalisé par un procédé selon l'invention ;
- la figure 42a, une vue partielle en perspective éclatée montrant un exemple de pavé moulant destiné à produire un dispositif de brossage et de peignage réalisé par un procédé selon l'invention
- la figure 42b, une vue de détail agrandie de la vue précédente ;
- la figure 43, une vue perspective montrant un exemple de pavé partiellement démonté en liaison avec un dispositif de brossage et de peignage selon l'invention représenté en position de moulage, avant éjection ;
- les figures 44a à 44d et 45, des vues en perspective montrant un ensemble de 4 pavés en combinaison, destinés à mouler un dispositif complexe comportant plusieurs rangées de poils disposés radialement autour d'un axe central, les différentes vues illustrant les mouvements relatifs possibles entre les pavés ;
- les figures 46 à 49, des vues en perspective montrant des poils ayant subi différentes opérations d'effilage postérieurement à l'opération de moulage;
- les figures 50 et 51, des vues frontales et en perspective montrant u exemple de dispositif de brossage et de peignage ayant subi une opération de finition par effilage ;
- les figures 52a et 52b, des vues schématiques d'une opération d'effilage avec une meule ;
- la figure 53, une vue schématique d'une opération d'effilage avec une bande abrasive ;
- la figure 54, une vue schématique d'une opération d'effilage avec un plateau abrasif ;
- les figures 55a et 55b, des vues schématiques d'une opération d'effilage chimique
- la figure 56, une vue schématique d'une opération de brûlage avec un élément chauffant plat ;
- la figure 57, une vue schématique d'une opération de brûlage avec un élément chauffant concave ;
- la figure 58, une vue schématique d'une opération de brûlage avec un élément chauffant convexe ;
- les figures 59 à 61, des vues schématiques perspectives de dispositifs de brossage et de peignage ayant subi des opérations de brûlage ;
- la figure 62, une vue schématique frontale d'un dispositif de brossage et de peignage ayant subi une opération de courbure convexe ;
- la figure 63, une vue schématique frontale d'un dispositif de brossage et de peignage ayant subi une opération de courbure concave ;
- les figures 64 et 65, des vues schématiques frontales de dispositifs dé brossage et de peignage ayant subi des opérations de courbures complexes ;
- la figure 66, une vue schématique perspective d'un dispositif de brossage et de peignage à deux rangées de poils opposées avant de subir une opération de courbure ;
- les figures 67a et 67b, des vues schématiques frontales d'un dispositif de brossage et de peignage à deux rangées de poils opposées après avoir subi une opération de courbure ;
- la figure 68, une vue schématique frontale d'un dispositif de brossage et de peignage à deux rangées de poils opposées après avoir subi une opération de courbure complexe ;
- la figure 69, une vue schématique d'une opération de courbure d'un dispositif de brossage et de peignage entre des cales mobiles ;
- les figures 70a à 70c, des vues schématiques d'une opération de courbure d'un dispositif de brossage et de peignage entre d'autres cales mobiles ;
- les figures 71a et 71b, des vues frontales de dispositifs de brossage et de peignage réalisés selon l'invention ;
- les figures 72a et 72d, des vues frontales de dispositifs de brossage et de peignage ayant subi une opération de brûlage ;
- la figure 73, une vue frontale d'un dispositif de brossage et de peignage ayant subi une opération d'effilage ;
- la figure 74, une vue frontale d'un dispositif de brossage et de peignage ayant subi une opération de courbure angulaire;
- les figures 75a et 75d, des vues frontales de dispositifs de brossage et de peignage ayant subi des opérations de courbure, et
- les_{.}figures 76a_{.} et 76h, des vues frontales de dispositifs de brossage et de peignage ayant subi des opérations de courbure de diverses amplitudes.

Sur les figures, les signes de références identiques se rapportent à des éléments identiques ou correspondant.

Comme illustré en figure l'une brosse à poils implantés selon l'art antérieur comporte:
- une pluralité de poils 100, généralement regroupés en touffes 4, chaque poil 1 étant un morceau de fibre synthétique extrudée ;
- un support 2 comportant des orifices dans lesquels sont piquées les touffes de poils 4,
- un manche ou poignée 3 relié au support, constitué de la même matière ou d'une matière différente.

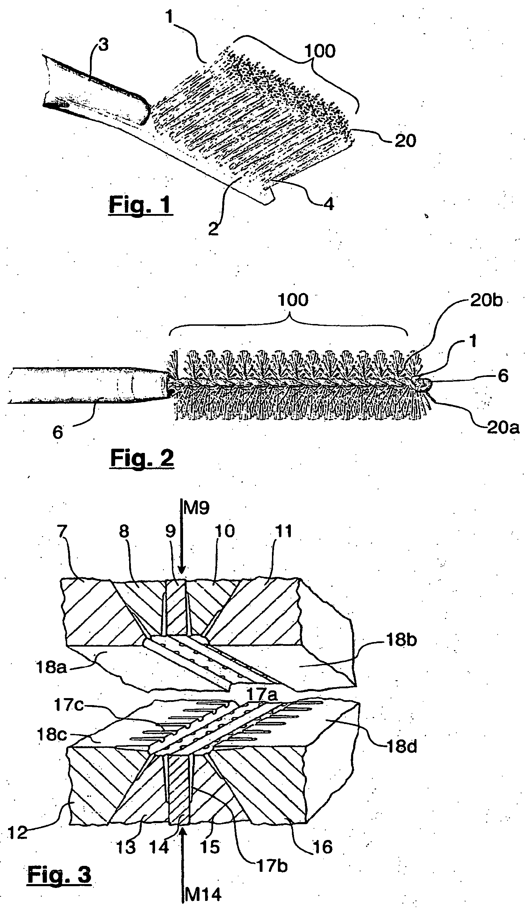

Un autre exemple de dispositif selon l'art antérieur, illustré en figure 2 est une brosse torsadée, constituée d'un fil métallique 6 recourbé en épingle et torsadé mécaniquement de façon à emprisonner une pluralité de poils 100. Chaque poil 1 présente deux extrémités 20a et 20b angulairement décalées de manière aléatoire par rapport aux extrémités des poils qui lui sont adjacents à cause des déformations en partie centrale du poil, occasionnées par le pincement du fil métallique. L'ensemble est fixé au bout d'une tige 5 par emboîtement à chaud d'une partie du fil métallique.

Un outillage, destiné à produire des brosses intégralement moulées en matière plastique selon l'art antérieur, partiellement représenté en figure 3 est constitué des blocs métalliques 7 à 16 assemblés entre eux et maintenus par une carcasse apte à permettre tous les mouvements nécessaires entre les blocs pour le moulage et le démoulage sur une presse à injecter. Les blocs sont organisés en deux sous-ensembles, 7 à 11 et 12 à 16.

Les surfaces de jointure entre ces sous-ensembles comme les surfaces 18a, 18b, 18c et 18d respectivement des blocs 7, 11, 12 et 16 sont appelées « plans de joint ». Un volume creux 17a comportant de multiples extensions 17b, 17c constitue la cavité moulante, ou empreinte. En fonctionnement, les étapes suivantes sont opérées par une machine automatique :
- fermeture du moule avec mise en contact de la surface 18a avec la surface 18c et de la surface 18b avec la surface 18d,
- injection de la matière plastique fondue dans la cavité 17a avec suffisamment de pression pour remplir les extensions de cavités 17b et 17c, l'air s'échappant par des interstices entre les blocs,
- refroidissement de la matière plastique jusqu'à sa solidification,
- ouverture du moule par translation de l'un des sous-ensembles de blocs 7 à 11 où 12 à 16, et
- éjection de la pièce plastique par déplacement du bloc 9 selon le mouvement M9 et du bloc 14 selon le mouvement M 14.

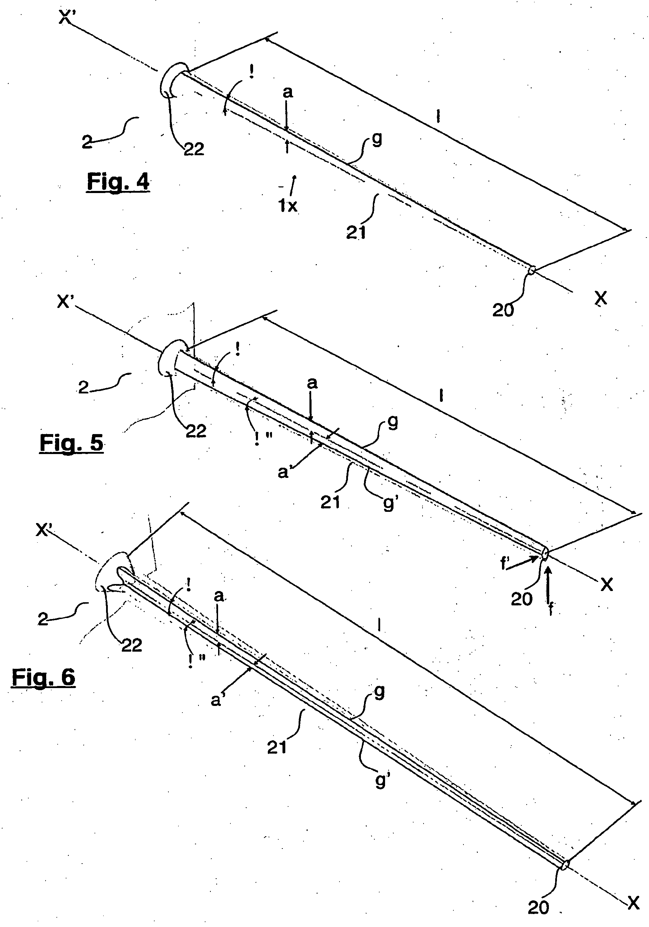

Le poil 1x, élément d'un dispositif de brossage et de peignage realisé par un procédé selon l'invention est décrit précisémenten référence aux figures 4, 5 et 6. comporte une portion principale 21 s'étendant le long de l'axe longitudinal XX' et présentant une génératrice droite g inclinée d'un angle α par rapport à cet axe. L'angle α est égal à 0,4° dans l'exemple de réalisation, de préférence compris entre 0,1 et 2° de manière plus générale.

Une extrémité du poil 1x est reliée à une surface support 2 par son embase 22 et l'autre extrémité, libre, est terminée par une surface 20 coupant l'axe XX'. La longueur totale « I » est grande par rapport à la distance « a » mesurée entre l'axe XX' perpendiculairement à celui-ci et un point quelconque de la génératrice g. Dans l'exemple, l est égale à 4 mm et le rapport l/a égale à 16. Le rapport l/a peut varier entre 5 et 100.

La portion principale 21 peut avoir une forme simple de révolution comme sur la figure 4, définie par la rotation de la génératrice g autour de l'axe XX' en conservant le même angle α tout autour de cet axe. Le poil 1x aura ainsi un module de flexion identique dans toutes les directions perpendiculaires à l'axe XX'.

Dans certains cas (illustrés par les figures 5 et 6), il est avantageux d'avoir une flexibilité du poil 1 x différente selon des axes d'efforts perpendiculaires f et f. Ce résultat peut être obtenu avec une forme évolutive de la portion principale 21 autour de l'axe XX', entre deux positions g et g' de la génératrice perpendiculaires entre elles avec respectivement des angles α et α' et des distances a et a'. La section du poil perpendiculairement à l'axe XX' est ovale ou elliptique, comme sur la figure 5, et un effort suivant f, produira moins de flexion du poil qu'un effort suivant f'.

Une autre forme géométrique intéressante de la portion principale 21, montrée sur la figure 6, est définie par l'évolution d'une génératrice autour de l'axe XX' en décrivant une courbe entre des positions extrêmes g et g' avec respectivement des angles α et α' et. des distances a et a'. La section du poil perpendiculairement à l'axe XX' est quadrilobée, ce qui permet d'une part d'avoir une bonne « nervosité » du poil tout en économisant la matière plastique et d'autre part de retenir un produit liquide ou pâteux dans les stries longitudinales par capillarité.

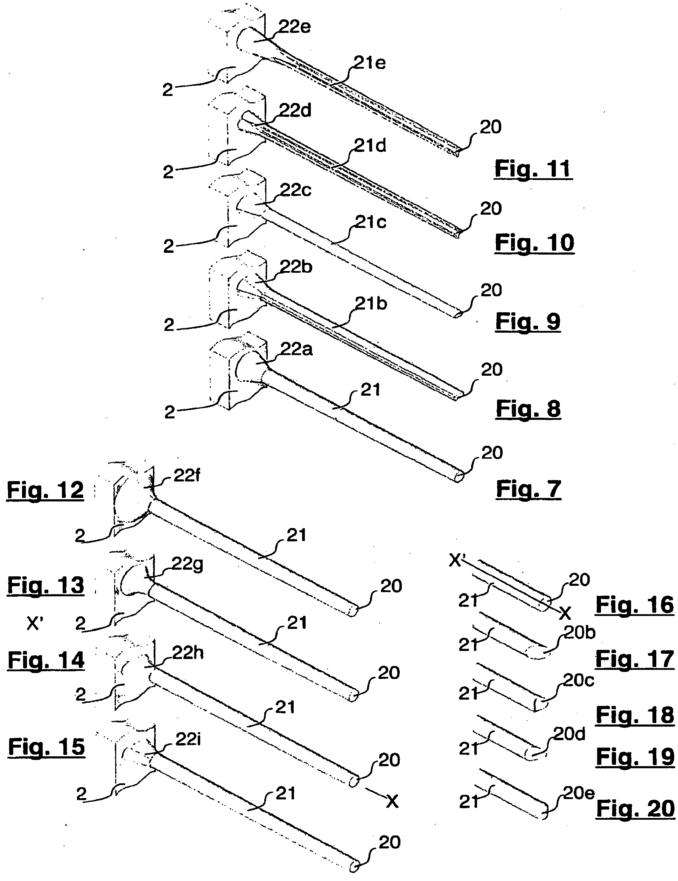

On a représenté sur les figures 7 à 20 des exemples de poils présentant diverses variantes de portions principales, d'embases et d'extrémités libres.

Le poil peut avoir une portion principale 21 de section transversale circulaire et une embase 22a de forme conique, comme représenté en figure 7.

Le poil peut avoir une portion principale 21b de section transversale rectangulaire aux coins arrondis, et une embase 22b de forme progressivement élargie, comme représenté en figure 8.

Le poil peut avoir une portion principale 21c de section transversale définie par 2 arcs de cercle, et une embase 22c de forme progressivement élargie, comme représenté en figure 9.

Le poil peut avoir une portion principale 21 d de section transversale quadrilobée, et une embase 22d de forme progressivement élargie à partir de chaque lobe, comme représenté en figure 10.

Le poil peut avoir une portion principale 21e de section transversale quadrilobée, et une embase 22e de forme conique, comme représenté en figure 11.

Le poil peut avoir une embase 22f de forme en trompette large, comme représenté en figure 12.

Le poil peut avoir une embase 22g de forme en trompette étroite, comme représenté en figure 13.

Le poil peut avoir une embase 22h de forme évolutive de génératrice courbe autour de l'axe XX', comme représenté en figure 14.

Le poil peut avoir une embase 22i de forme évolutive de génératrice droite autour de l'axe XX', comme représenté en figure 15.

Le poil peut avoir une extrémité libre 20 plate perpendiculaire à l'axe XX', comme représenté en figure 16.

Le poil peut avoir une extrémité libre 20b plate inclinée par rapport à l'axe XX', comme représenté en figure 17.

Le poil peut avoir une extrémité libre 20c cylindrique concave, d'axe perpendiculaire à l'axe XX', comme représenté en figure 18.

Le poil peut avoir une extrémité libre 20d cylindrique concave, d'axe perpendiculaire à l'axe XX', mais décalé dans un autre plan de façon à créer une pointe dissymétrique, comme représenté en figure 19.

Le poil peut avoir une extrémité libre 20e cylindrique convexe, d'axe perpendiculaire à l'axe XX', comme représenté en figure 20.

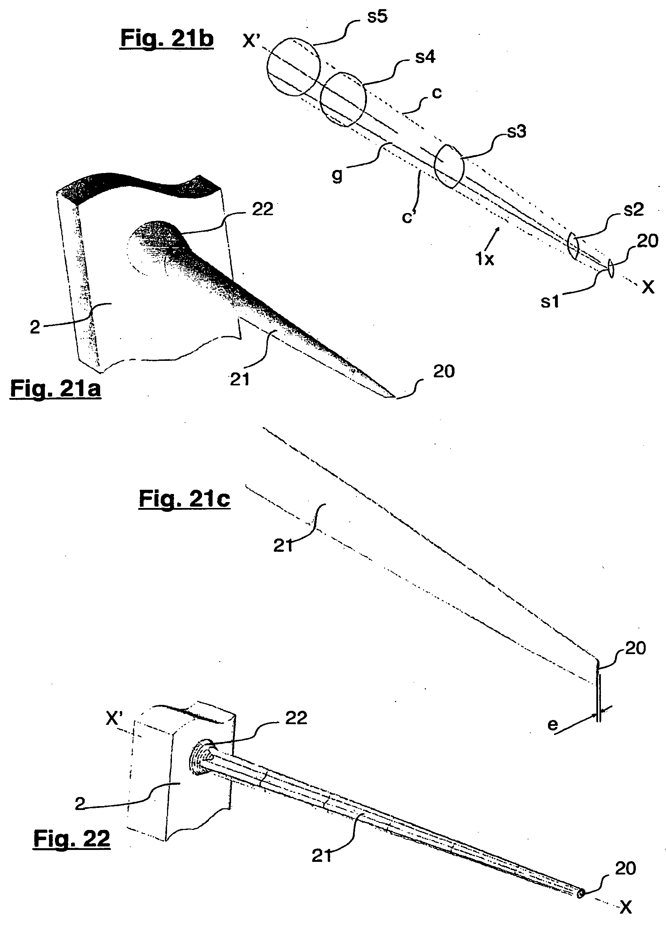

Le poil illustré en figure 21a a une portion principale 21 de forme évolutive particulière qui sera mieux comprise sur la figure schématique 21 b présentant les contours formés par différents plans de section : la génératrice droite g évolue entre les contours s1 et s5 constitués chacun de deux courbés. La portion principale est donc définie géométriquement par deux surfaces réglées raccordées dans un plan représenté par les lignes c et c' qui peuvent être droites ou courbes. La figure 21c est une vue agrandie de l'extrémité libre 20 de la portion principale 21, qui est dans cette configuration très petite, son épaisseur « e » étant dans l'exemple égale à 0,05 mm.

Le poil représenté en figure 22 comporte une portion principale 21 de forme évolutive le long de l'axe XX' entre une section transversale circulaire du côté de l'extrémité libre et une section transversale quadrilobée du côté de la liaison avec l'embase 22.

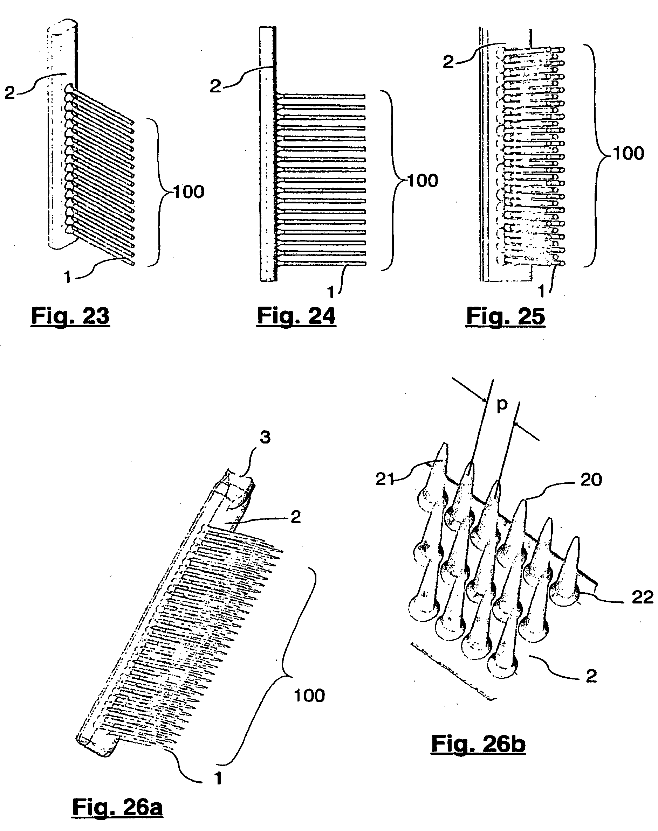

Un dispositif de brossage et de peignage comporte une pluralité de poils 100 disposée en une seule rangée de poils 1 sur un support allongé 2, comme illustré sur la figure 23, ou en plusieurs rangées de poils 1 alignés les uns derrière les autres sur un support allongé 2, comme sur la figure 24. Les rangées de poils peuvent avantageusement être décalées en quinconce sur le support allongé 2, comme montré sur la figure 25.

Un dispositif de brossage et de peignage particulièrement performant comporte des poils 1 très serrés, c'est-à-dire avec une distance entraxe p de faible valeur, avec des portions principales 21 évolutives et des extrémités libres 20 très petites, comme illustré sur les figures 26a et 26b. Ainsi, la concentration de poils 100 est très dense et les espaces entre les extrémités libres 20 restent suffisamment grands pour permettre le passage de fibres dans le cas d'un peignage, ou la flexion des poils dans le cas d'un brossage.

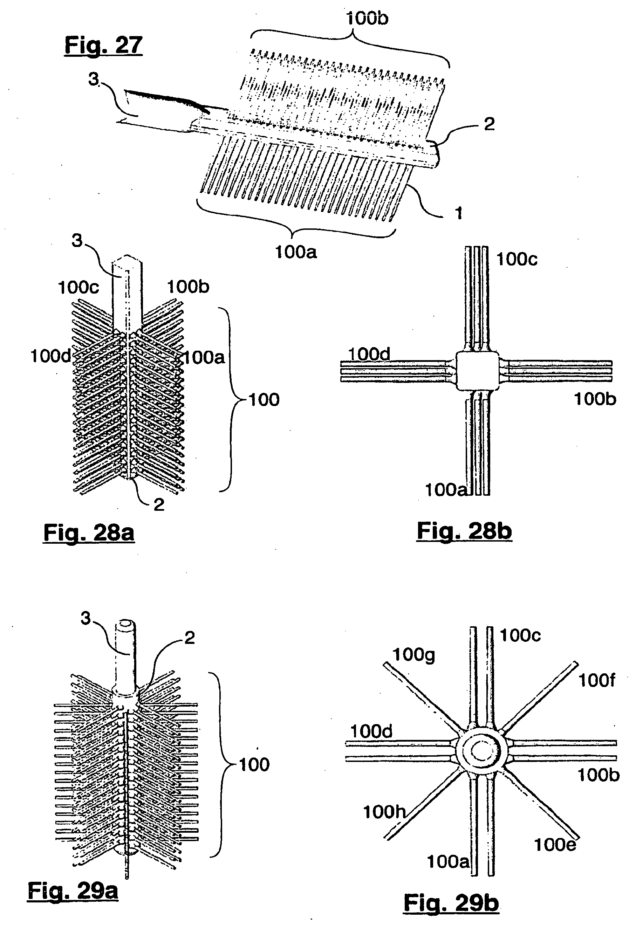

Des variantes avantageuses du dispositif de brossage et de peignage comportent plusieurs groupes de poils 100 disposés de part et d'autre, ou radialement autour d'un support allongé 2, telles qu'illustrées dans les figures 27, 28a, 28b, 29a et 29b.

L'exemple de la figure 27 en vue perspective comporte deux groupes de poils 100a et 100b ayant chacun des caractéristiques différentes et pouvant être utilisés séparément ou successivement. Le groupe 100a permet un peignage rapide et grossier avec une seule rangée de poils relativement espacés et le groupe 100b permet un peignage plus fin avec plusieurs rangées de poils serrés.

L'exemple représenté en figures 28a (vue perspective) et 28b (vue supérieure) comporte quatre groupes de poils 100a, 100b, 100c, 100d, répartis autour d'un support allongé 2 de section carrée. Les quatre groupes sont constitués chacun de trois rangées de poils disposés de façon symétrique. Le prolongement 3 du support 2 est destiné au montage sur une poignée, ou autre organe de préhension.

L'exemple représenté en figures 29a (vue perspective) et 29b (vue supérieure) comporte quatre groupes de deux rangées de poils 100a, 100b, 100c, 100d, et quatre groupes d'une seule rangée de poils 100e, 100f, 100g, 100h répartis alternativement autour d'un support allongé 2 de section ronde. Cette disposition est particulièrement avantageuse pour remplacer une brosse torsadée de l'état de l'art telle que représentée en figure 2. Contrairement à la brosse torsadée dont le nombre et la disposition des poils sont aléatoires, nous avons un nombre de poils déterminé, avec une disposition précise. Le prolongement 3 du support 2 est destiné au montage sur une poignée, une tige, ou un autre organe de préhension non représenté. Ce montage peut être assuré par une multitude de procédés connus : collage, sertissage, soudure, surmoulage, agrafage, par exemple.

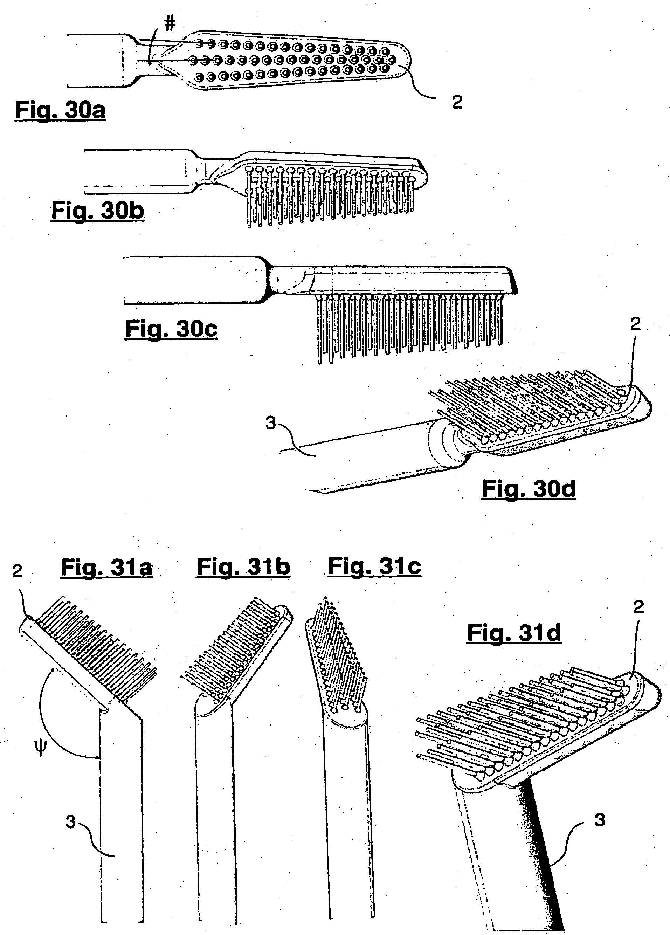

L'exemple de dispositif de brossage présenté en figures 30a à 30d selon différents angles de vue, comporte 3 rangées de poils non parallèles entre elles en formant un angle ϕ.

L'exemple de dispositif de brossage présenté en figures 31a à 31d selon différents angles de vue, comporte une tige 3 décalée angulairement (angle ψ) par rapport au support 2 de la pluralité de poils.

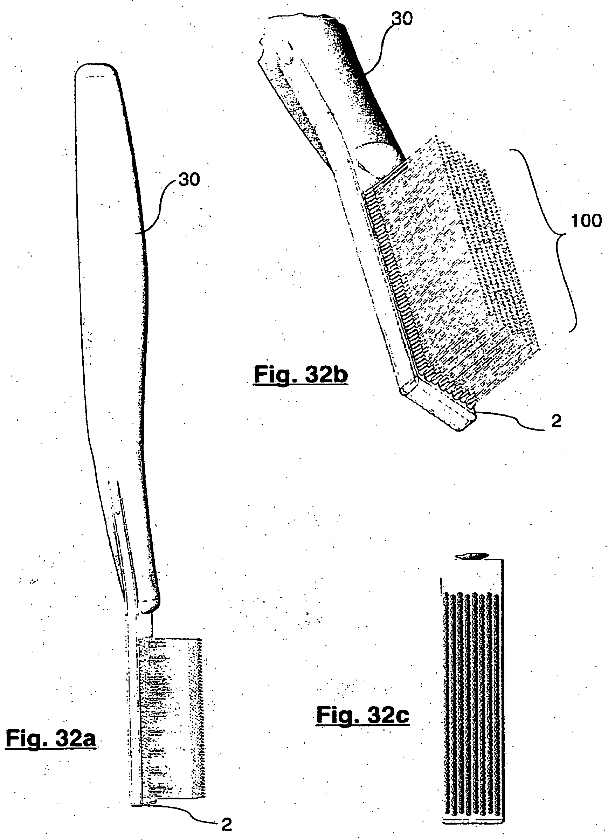

Une variante spécialement adaptée à un brossage plus intensif, illustré par les figures 32a à 32c comporte un seul groupe de poils 100 constitué de multiples rangées très rapprochées, sur un support plat et allongé 2. Cette disposition est particulièrement avantageuse pour remplacer une brosse à poils implantés de l'état de l'art telle que représentée en figure 1. Contrairement à la brosse à poils implantés, les poils sont ici disposés de façon précise et régulière, et peuvent être moulés en une seule opération, avec une seule matière. Le manche 3 adapté à une prise en main peut être moulé dans la même matière plastique que les poils, ou faire l'objet de surmoulages avec d'autres matières de couleurs et de duretés différentes pour en améliorer le confort. Lorsqu'elle est convenablement dimensionnée, cette brosse peut servir au brossage des dents.

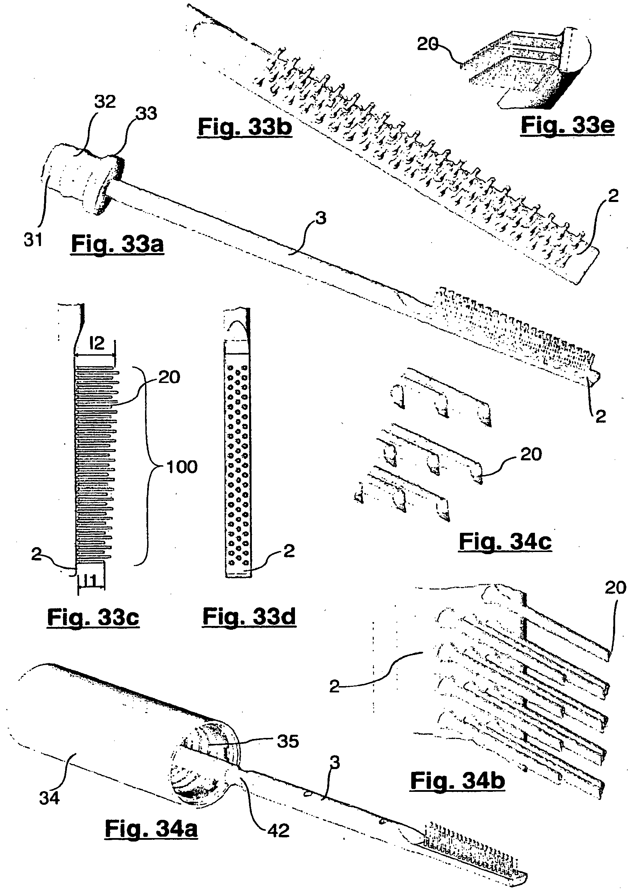

Un conditionnement adapté à l'application d'un produit pâteux sur les cils, en particulier un mascara, illustré par les figures 33a à 37, comporte un groupe de poils 100 constitué de plusieurs rangées, sur un support allongé 2 (figures 33a à 33e). Une tige 3 dans le prolongement du support 2 est liée a un embout de vissage 35 par un bulbe de centrage 31, un jonc de maintient 32 et éventuellement un plateau d'arrêt 33 (figure 33a). Un capot 34 monté sur l'embout de vissage 35 par des cannelures 36 ou tout autre moyen de liaison fait office d'organe de préhension (figure 34a).

Avantageusement, les caractéristique suivantes, prises isolément ou en combinaison, permettent d'améliorer les performances du dispositif pour une l'application d'un produit pâteux sur les cils :
- les extrémités libres 20 des poils constituant la pluralité de poils100 sont disposés parallèlement à une ligne droite « L », inclinée par rapport au support 2, comme illustré en figure 33c et présentent des longueurs de poils variant entre I1 et I2 pour une même rangée ;
- au moins une rangée 37 comporte des poils plus longs que les poils des rangées adjacentes, comme illustré en figure 33e, de façon à permettre un engagement plus facile des cils dans le dispositif ;
- les poils disposés en quinconce comme illustré en figure 33d, permettent d'agripper les cils lors du peignage, de façon à exercer une légère traction pour les recourber ;
- les extrémités libres 20 présentent une forme pointue comme illustré en figure 34c de façon à permettre un engagement plus facile des cils dans le dispositif, sans toutefois risquer de provoquer des blessures à l'utilisateur.

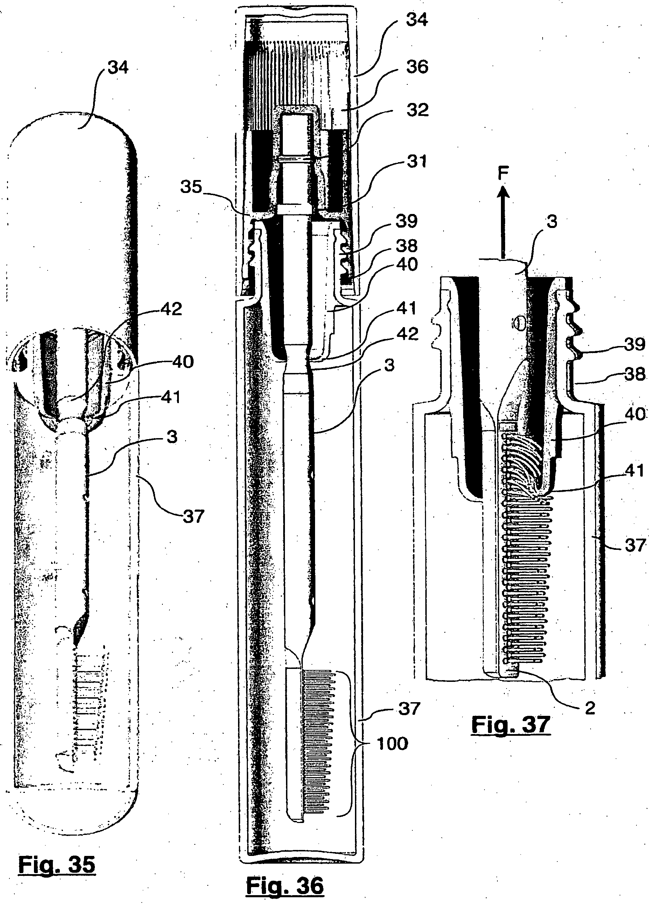

En référence aux figures 35 à 37 illustrant des vues en coupe (partielles pour les figures 35 et 37), la pluralité de poils 100 et la tige 3 sont immergés dans un récipient 37 contenant un produit pâteux (non représenté) de façon à remplir les interstices entre les poils avec ledit produit. La fermeture du récipient 37 est assurée par l'embout de vissage 35 qui collabore avec une partie rétrécie 38 du récipient 37, comportant un filetage 39. Avant l'utilisation, la pluralité de poils 100 est partiellement essuyée par un essoreur 40 en matière souple, localisé dans l'ouverture du récipient 37 et comportant une lèvre d'essuyage 41. Cette phase d'essuyage, illustrée en figure 35, caractérisée par une déformation élastique de la lèvre 41 de l'essoreur 40 et par un fléchissement des poils par l'action de la force F exercée manuellement, aura pour effet de doser une quantité régulière de produit pâteux sur la pluralité de poils 100. Une autre action de la lèvre 41 de l'essoreur 40 est d'essuyer la partie cylindrique de la tige 3. Une réduction de diamètre 42 de la tige 3 est destinée au repos de la lèvre 41 de l'essoreur 40 en position de stockage.

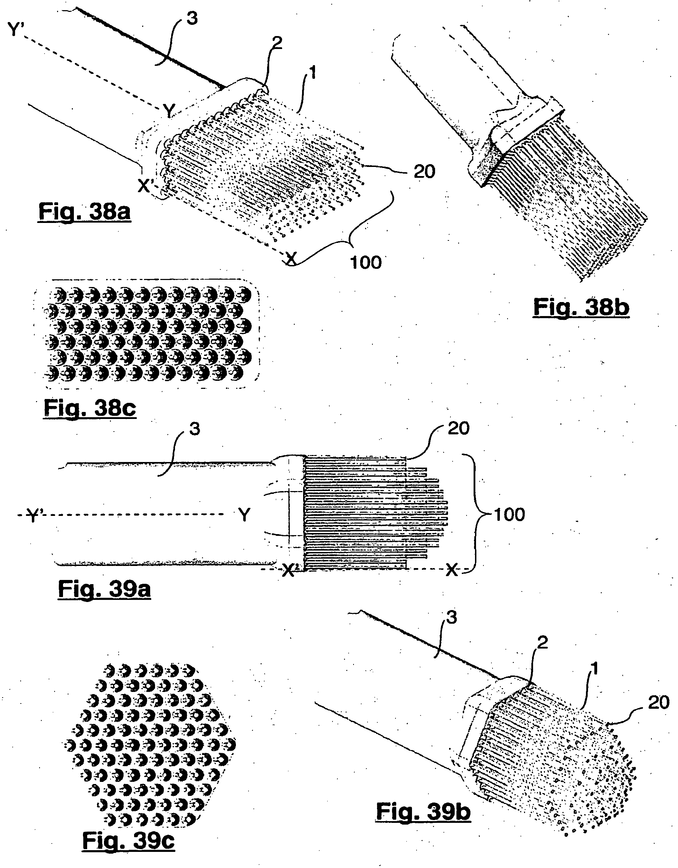

Selon d'autres exemples de réalisation, illustrés par les figures 38a à 39b, la pluralité de poils 100 est disposée de façon à ce que l'axe longitudinal XX' de chaque poil soit sensiblement parallèle à l'axe longitudinal YY' de la tige 3. Cette configuration de type « pinceau » est adaptée à l'application d'une peinture, d'un vernis, ou d'un produit de maquillage sur une surface. La pluralité de poils 100 peut par exemple avoir un contour rectangulaire, comme sur la figure 36c, ou un contour hexagonal, comme sur la figure 39c. Les extrémités libres 20 des poils peuvent être toutes alignées dans un plan, comme illustré sur les figures 37a et 38b, ou étagées de façon progressive comme illustré sur les figures 39a et 39b.

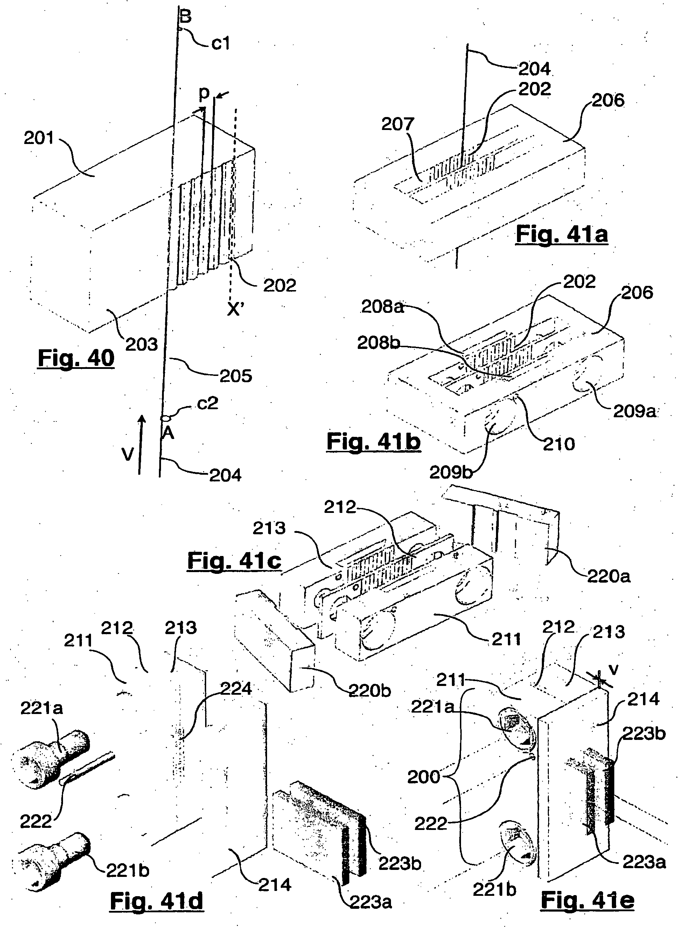

Pour obtenir une pluralité de poils 100 telle que précédemment décrite, on utilise, en référence à la figure 40, un moule d'injection comportant au moins un pavé 200 constitué de plusieurs blocs métalliques 201 dans lesquels sont pratiquées des cavités 202 destinées à mouler de la matière thermoplastique pour former les poils. Un procédé de réalisation d'un pavé 200 apte à produire un dispositif de brossage et de peignage réalisé par un procédé selon la présente invention est décrit par les figures 40 à 41e.

La représentation schématique de la figure 40 montre le principe d'adaptation à l'usinage filaire pour la formation de poils à partir du procédé d'électroérosion utilisé pour usiner un bloc métallique 201 : un fil conducteur 204 alimenté en courant électrique enlève des particules de matière à la surface 203 du bloc 201, de façon à créer successivement des cavités 202. Pour limiter son usure, le fil 204 se renouvelle continuellement par un mouvement de translation (flèche V), et l'ensemble est immergé dans un fluide de refroidissement. Le fil 204 est tendu entre les deux points A et B qui décrivent chacun une trajectoire programmée de façon à générer la surface de la cavité 202 souhaitée. Par exemple, sur cette figure 40, les points A et B se déplacent suivant des cercles c1 et c2 de diamètres légèrement différents, générant l'enveloppe faiblement conique 205 représentée.

Lorsqu'une cavité 202 est créée, le fil se déplace de la distance correspondant à l'entraxe p pour usiner la cavité suivante. Sur le bloc 201 tel que représenté, ne sont usinées dans la surface 203 que des demi cavités aptes à former des poils. Un autre bloc (non représenté), comportant sur une surface des demi cavités sera mis en correspondance pour former des cavités complètes.

De manière optimisée, pour avoir un bon état de surface des cavités 202, l'usinage se fait en plusieurs passes, avec un fil 204 de diamètre de plus en plus fin. Par exemple pour la première passe, ou passe d'ébauche, un fil de diamètre 0,2mm peut être utilisé, en gardant une distance par rapport à la surface finale des cavités 202, et pour la passe de finition, un fil de diamètre 0,06mm, voir même de 0,03mm, peut être utilisé. La finesse du fil 204, associée à un déplacement très lent et une intensité de courant maîtrisée de manière connue permet d'obtenir un bon état de surface des cavités 202, avec des micro stries orientées dans le sens de l'axe XX', axe principal d'un poil. Ces micro stries ne s'opposeront pas au démoulage de la matière thermoplastique. Par ce procédé, nous pouvons obtenir des cavités de diamètres compris entre 0,1 mm et 1 mm, pour des longueurs comprises entre 1,5 et 15 mm.

Les principales étapes de la réalisation d'un pavé 200 pour moulage d'une pluralité de poils 100 sont représentées schématiquement sur les figures 41a à 41e :
- en référence à la figure 41a, un morceau d'acier traité 206 est ébauché de manière à obtenir plusieurs blocs constituant un même pavé 200 ; des évidements rectangulaires 207 sont préliminairement pratiqués par enfonçage d'une électrode d'électroérosion ou par découpe au fil d'ébauche après forage d'un avant-trou ; le fil 204 usine plusieurs rangées de demi cavités ;
- en référence à la figure 41b, de multiples opérations d'usinages par électroérosion sont pratiquées dans le morceau d'acier 206 pour obtenir : des évidements 208a et 208b, propres à recevoir des blocs éjecteurs 223a et 223b, des trous 209a et 209b taraudés, propres à recevoir des vis d'assemblages 221 a et 221 b, et un trou lisse 210 propre à recevoir une goupille de centrage 222 ; le fait de pratiquer tous ces usinages dans le même morceau d'acier permet d'obtenir une précision de positionnement optimale entre eux ;
- en figure 41c, le morceau d'acier 206 est coupé de façon à obtenir les blocs 211, 212 et 213, les blocs 220a et 220b étant éliminés :
- en figure 41d, les blocs 211,212 et 213 sont positionnés par une goupille de centrage 22, puis assemblés par des vis 221a et 221b, une plaque 214 est disposée de façon à obturer l'extrémité 224 des cavités, et des blocs d'éjection 223a et 223b sont glissés dans les évidements 208a et 208b ;
- en figure 41e, le bloc 200 est assemblé ; le serrage énergique des vis 221 a et 221 b permet de supprimer tout jeu entre les blocs 211, 212 et 213 en évitant ainsi les fuites et bavures de matière thermoplastique lors de l'opération d'injection. En revanche un jeu v est volontairement ménagé entre la plaque d'obturation 214 et les trois blocs de moulage 211, 212 et 213 pour chasser l'air présent dans les cavités lors de l'opération d'injection ; ce jeu (flèches v) sera par exemple de 0,02mm ; les blocs d'éjection 223a et 223b coulissant librement dans les évidements 208a et 208b sont actionnés en translation par un mécanisme extérieur non représenté.

Une variante de pavé 200 est représentée sur les figures détaillées 42a et 42b. De manière à former 3 rangées de poils parallèles, le pavé est constitué de 4 blocs principaux, 211, 212a, 212b et 213. La plaque d'obturation 214 (figure 41d) est ici remplacée par des barres d'obturation 224a, 224b et 224c chargées de remplir les mêmes fonctions d'éventation du moule et de formation de l'extrémité libre des poils. Chaque barre est intercalée entre deux blocs dans des logements creusés de part et d'autre : la barre 224a se place entre les blocs 211 et 212a dans les logements 225a et 225b complémentaires, la barre 224 entre les logements 225c et 225d, et la barre 224c entre les logements 225e et 225f. La barre 224a ayant un diamètre légèrement plus petit que son logement complet constitué par les deux cavités 225a et 225b (la différence de diamètre étant par exemple de 0,01 mm), l'air pourra s'échapper dans l'interstice au moment de l'injection de la matière thermoplastique.

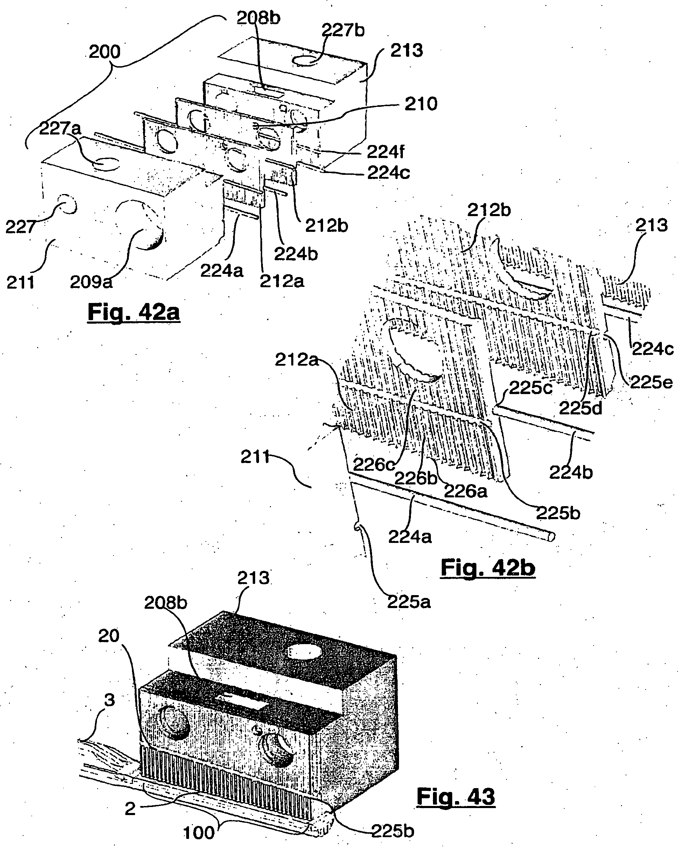

Des dispositions avantageuses sont également illustrées par la vue éclatée de la figure 42a :
- les trous 209a et 209b destinés aux vis d'assemblages (non représentées) sont alternées de façon à gagner de la place, une vis dans le trou 209a a sa tête logée dans le bloc 211 et son filetage vissé dans le bloc 213, l'autre vis dans le trou 209b a sa tête logée dans le bloc 213 et son filetage vissé dans le bloc 211 ;
- deux trous 227a et 227b sont destinés au passage de vis pour fixer le pavé sur le moule comportant les parties complémentaires (non représentées) nécessaires au moulage d'un dispositif de brossage et de peignage,

D'autres dispositions avantageuses sont mises en évidence sur la vue agrandie de la figure 42b :
- l'axe des logements 225a et 225b n'est pas centré dans le plan de joint entre les blocs 211 et 212a de façon à former une extrémité libre de poil décalée, comme décrite précédemment ;
- chaque cavité destinée à former un poil est décomposée en trois zones dans un bloc 212a par exemple, la zone 226a, évasée pour former l'embase du poil, la zone 226b pour former la portion principale du poil, et la zone 226c, non moulante puisque située après la barre d'obturation mais utile à l'évacuation de l'air ;
- les trois barres d'obturation 224a, 224b et 224c sont inclinées par rapport à la surface d'embase des blocs de façon à former des poils de longueurs différentes sur une même rangée, les extrémités libres étant alignées suivant une pente ;
- la barre d'obturation centrale 224b est disposée plus haute que les deux autres pour former une rangée centrale de poils plus longs.

Sur la figure 43, on a représenté une vue du pavé partiellement démonté, avec un dispositif de brossage et de peignage placé tel qu'il est moulé. Les extrémités libres 20 des poils sont alignées à l'emplacement sur le logement 225b des barres d'obturations (absentes sur cette vue). Après solidification de la matière thermoplastique, un bloc d'éjection (non représenté) coulisse dans l'évidement 208b de façon à forcer sur la surface 2 et à chasser le dispositif moulé vers le bas.

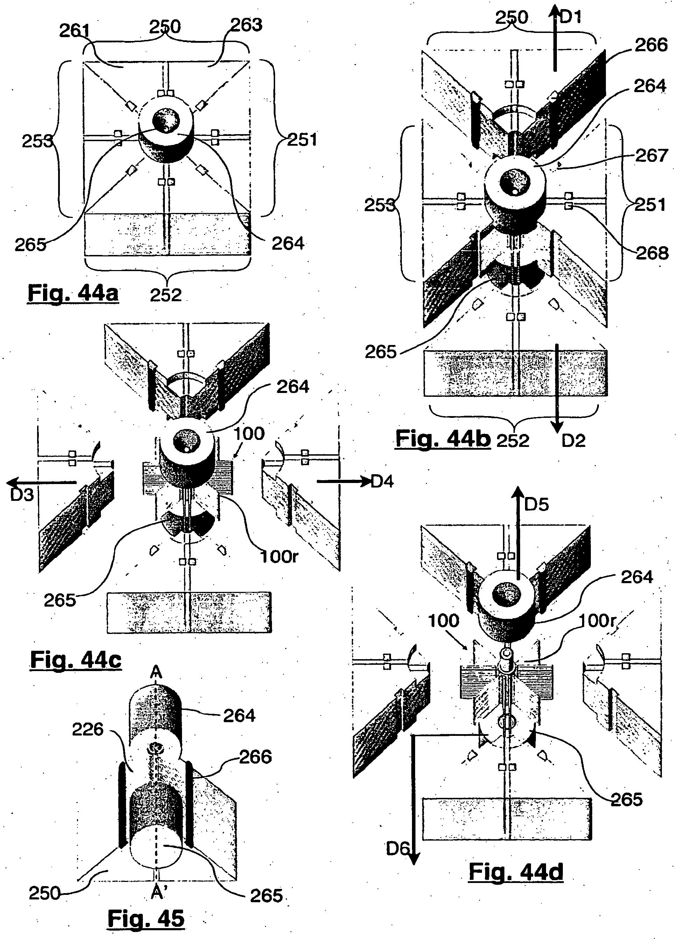

En référence aux figures 44a à 44d, un ensemble de 4 pavés en combinaison 250, 251, 252 et 253 est représenté aux différents stades d'une opération de moulage d'un ensemble de poils de brossage ou peignage complexe 100, du type illustré par la figure 29a. Cet ensemble comporte plusieurs rangées de poils 100r disposés radialement autour d'un axe central AA' (figure 45).

Les différentes vues 44b à 44d illustrent les mouvements relatifs successifs entre les pavés à partir de la position avant démoulage (figure 44a), où les pavés 250 à 253 forment un bloc compact. Les pavés sont formés à partir de blocs élémentaires 261, 262 (figure 44a) assemblés par des moyens de fixation classiques non représentés. Le tube comportant le point d'injection de matière 264 est monté de manière centrale. Un autre tube 265 est monté sur le même axe, dé l'autre coté du dispositif.

Les pavés opposés 250 et 252 sont d'abord écartés (flèches D1 et D2, figure 44b) laissant apparaître les barrettes d'éventation 266 et rainures 267 correspondantes. Puis les deux autres pavés opposés 251 et 253 sont écartés (flèches D3 et D4, figure 44c). Après démontage des tubes 264 et 265, l'ensemble de brossage est rendu visible sur la figure 44d.

En figure 45, il a été représenté de manière plus détaillée en perspective, les tubes 264 et 265 disposés selon l'axe central A'A, au regard du pavé arrière 250 muni de ses nervures 266.

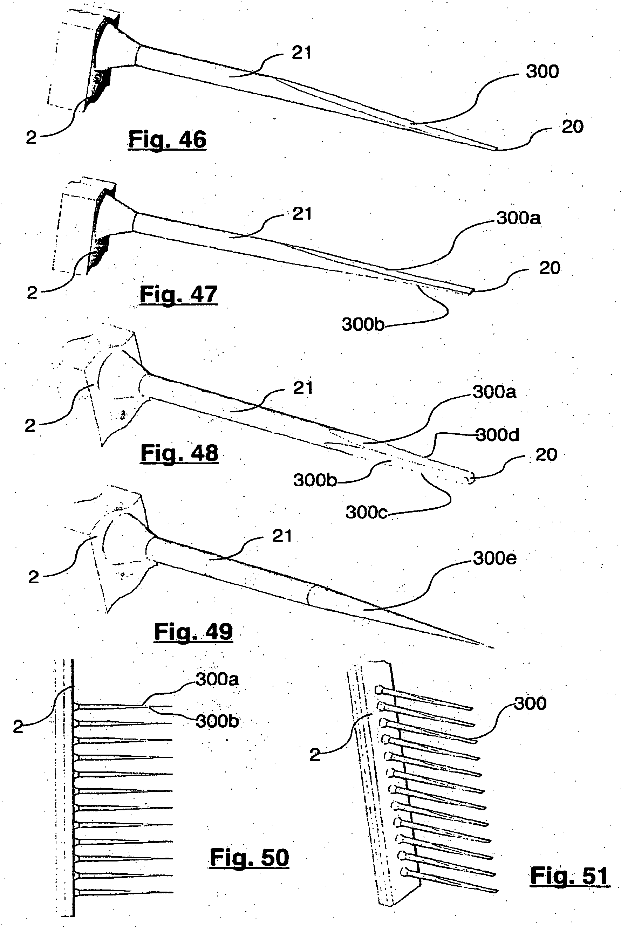

Les figures 46 à 49 représentent des vues en perspective montrant un poil 21 sur un support 2, ayant subi différentes opérations d'effilage postérieurement à l'opération de moulage : un « méplat » simple 300 ou double 300a - 300b (figures 46 et 47) se terminant par une extrémité plate 20, des méplats multiples 300a à 300d (figure 48) et un effilage conique 300e (figure 49).

Les poils ayant subi une opération de finition par effilage, par exemple de double effilage en référence à la figure 47, forment un dispositif de brossage et de peignage comme représenté sur les figures 50 et 51.

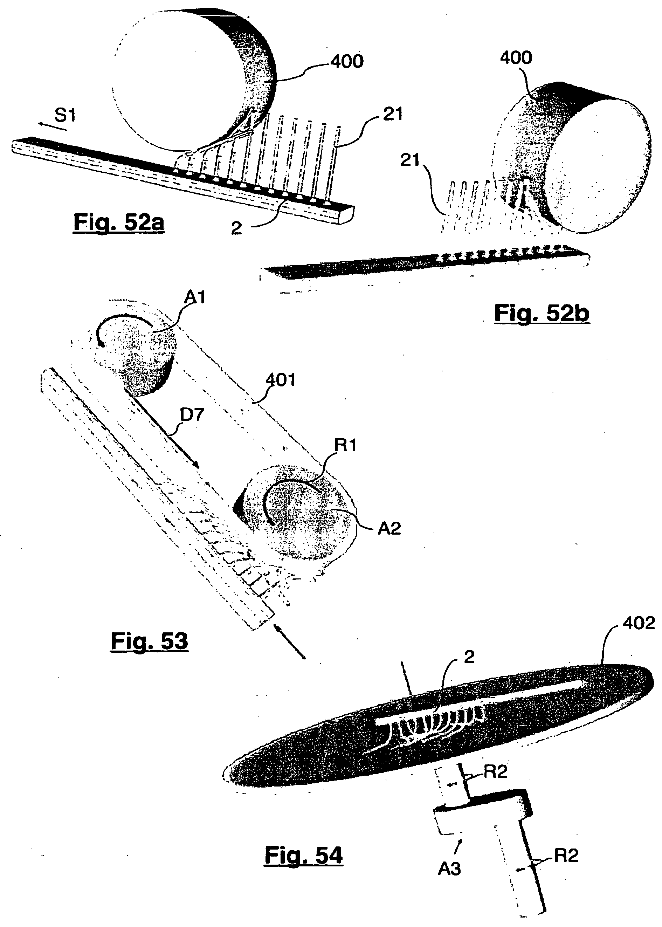

Les opérations d'effilage des poils 21 sont conduites par exemple par:
- une meule 400 par passage dans un sens de déplacement S1 parallèlement a support 2 (figure 52a : formation d'un premier méplat 300a) puis dans le sens opposé S2 (figure 52b : formation du méplat opposé 300b) ;
- une bande abrasive 401 se déplaçant (flèche D7) par entraînement à partir de deux arbres A1 et A2 en rotation (flèche F1 (figure 53), ou
- un plateau 402 à surface abrasive (figure 54) entraîné en rotation R2 à partir d'un arbre désaxé A3 pour un effilage de type conique (en référence à la figure 49.

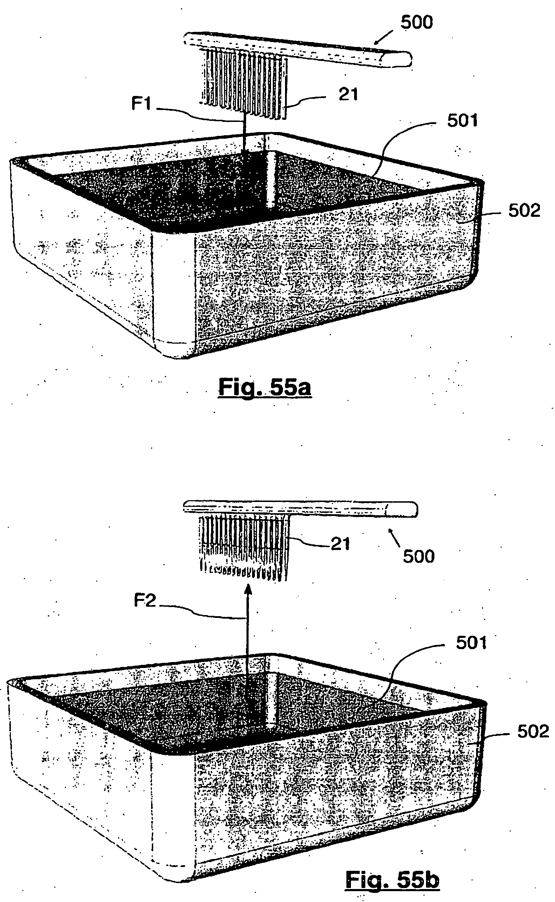

Alternativement, l'effilage peut être réalisé par attaque chimique : en référence aux figures 55a et 55b, une brosse 500 munie de poils 21 est plongée (flèche F1) dans un bain d'acide 501 disposée dans un bac 502, puis retirée de ce bain (flèche F2), la durée d'immersion et les vitesses de plongée et de retrait sont ajustées pour obtenir l'effilage conique souhaité.

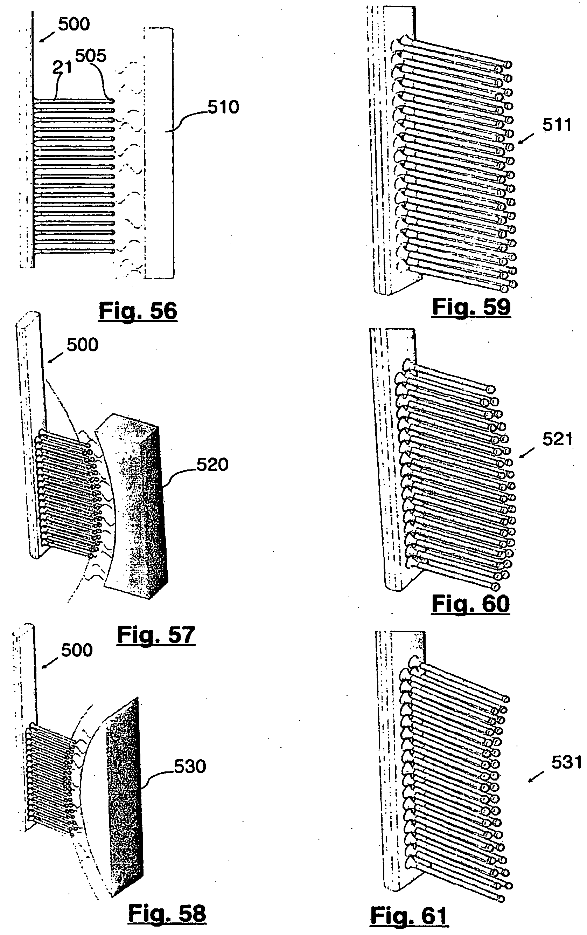

Comme illustré par les figures 56 à 61, il est avantageux d'utiliser un élément chauffant afin d'obtenir une forme particulière en embout élargi 505 des poils 21 d'une brosse 500, avec une forme particulière de l'enveloppe de ces embouts. Ainsi :
- la figure 56 illustre une opération de brûlage avec un élément chauffant plat 510 afin d'obtenir une enveloppe plane des embouts 511;
- la figure 57 montre une opération de brûlage avec un élément chauffant concave 520 afin d'obtenir une enveloppe concave 521; et
- la figure 58 représente une opération de brûlage avec un élément chauffant convexe 530 afin d'obtenir une enveloppe convexe 531.

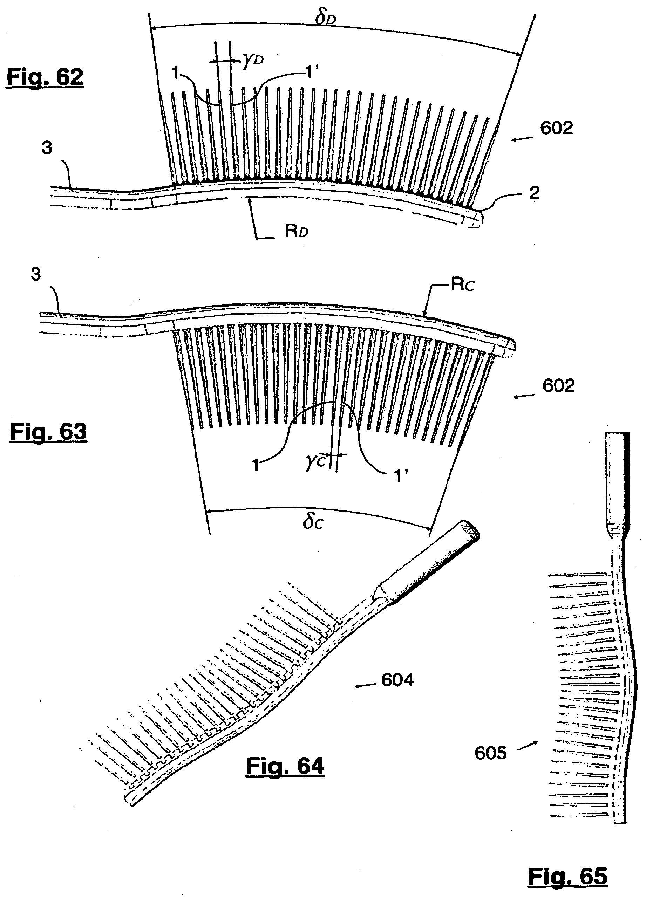

En référence aux figures 62 à 65, différents dispositifs de brossage et de peignage selon l'invention sont représentés, le support 2 de ces dispositifs 602 à 605 ayant subi respectivement :
- des opérations de courbure convexe (figure 62) ou concave (figure 63) ;
- des opérations de courbures complexes (figures 64 et 65) c'est-à-dire convexes et concaves alternées.

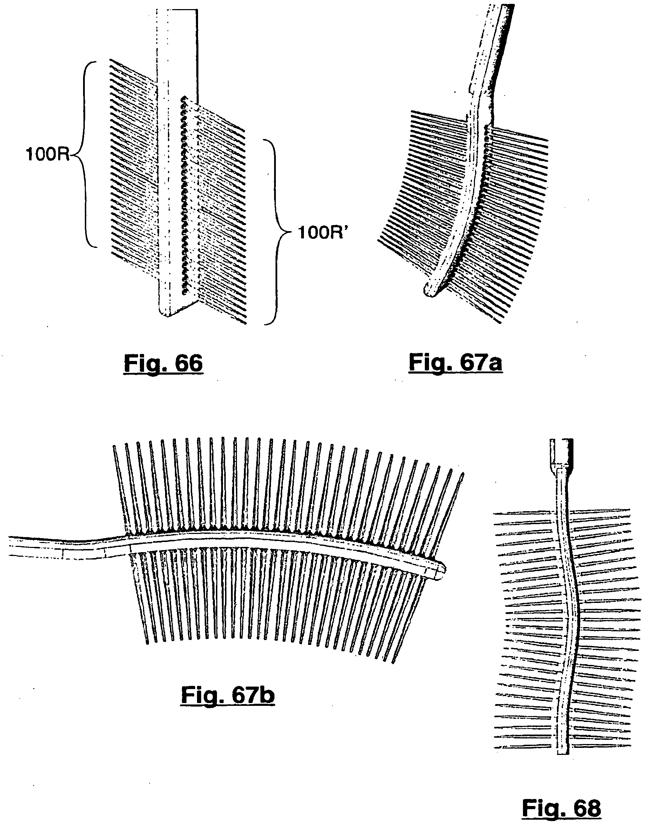

D'autres variantes de dispositifs 606 à 608 à deux rangées de poils, disposées dans un même plan de chaque côté opposé du support 2, sont illustrées respectivement sur les figures 66, 67a - 67b et 68 :
- avant de subir une opération de courbure du support 2, les deux rangées 100R et 100 R' sont disposées symétriquement par rapport au support 2 (figure 66) ;
- en référence aux figures 67a et 67b, le support 2 des deux rangées 100R et 100R' opposées a subi une opération de courbure simple;
- en référence à la figure 68, le support 2 des deux rangées 100R et 100R' opposées a subi une opération de courbure complexe à courbures alternées.

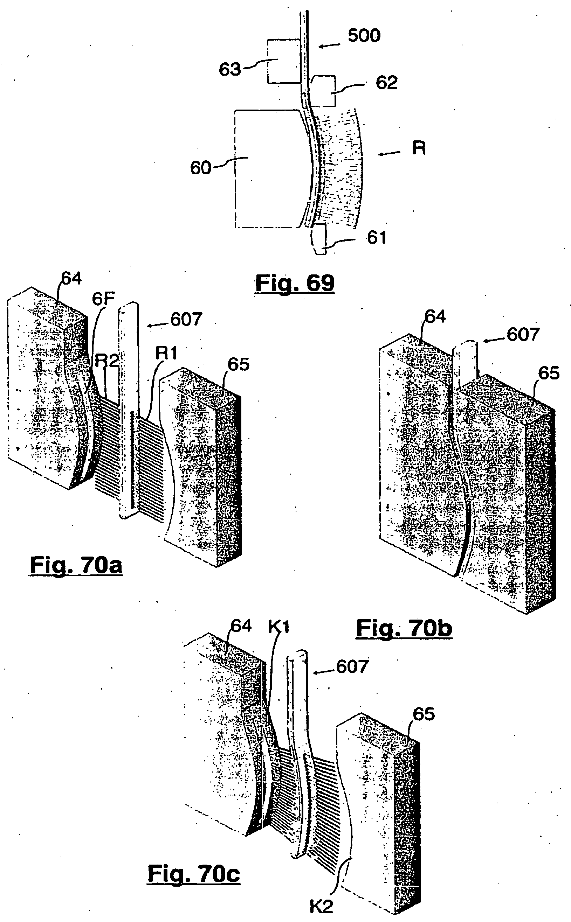

Afin d'obtenir des dispositifs à support courbé comme illustrés précédemment, des opérations de courbure du support 2 sont réalisées par déformation mécanique, avec apport optionnel d'énergie thermique :
- entre des cales mobiles 60, 61, 62 et 63 hors des rangées R de poils (figure 69) du dispositif 500 de la figure 69, présentant une ou des rangées disposées du même côté du support, ou
- entre deux cales mobiles 64 et 65 dans une fente 6F desquelles s'insèrent chaque rangée R1 et R2 de poils, dans le cas du dispositif 607 des figures 70a et 70b présentant des rangées opposées.

Avant la déformation, les cales 64 et 65 sont placées de chaque côté du support 2, en regard de chaque rangée R1 et R2 de poils, les cales présentant les courbures complémentaires, convexe K1 et concave K2, adéquates. Les cales sont ensuite accolées (figure 70b) afin d'obtenir la courbure du support après le moulage par déformation mécanique, les rangées de poils étant disposées dans les fentes des cales correspondantes. Enfin, les cales 64 et 65 sont écartées et le dispositif 607 présente alors la courbure souhaitée (figure 70c).

Les courbures multiples des dispositifs 604, 605 et 608 (respectivement illustrés sur les figures 64, 65 et 68) sont obtenues en utilisant des cales du type précédent présentant les courbures multiples complémentaires appropriées.

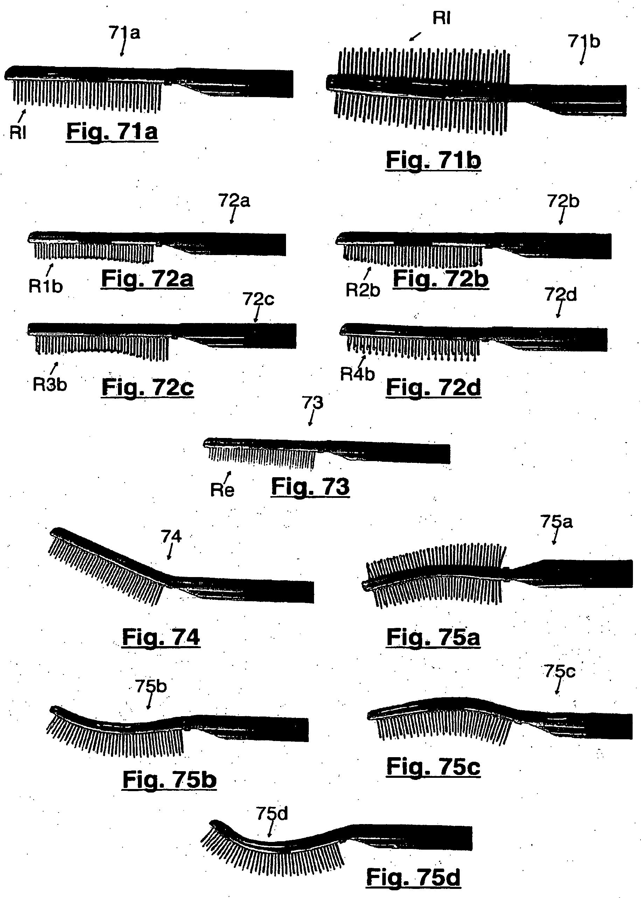

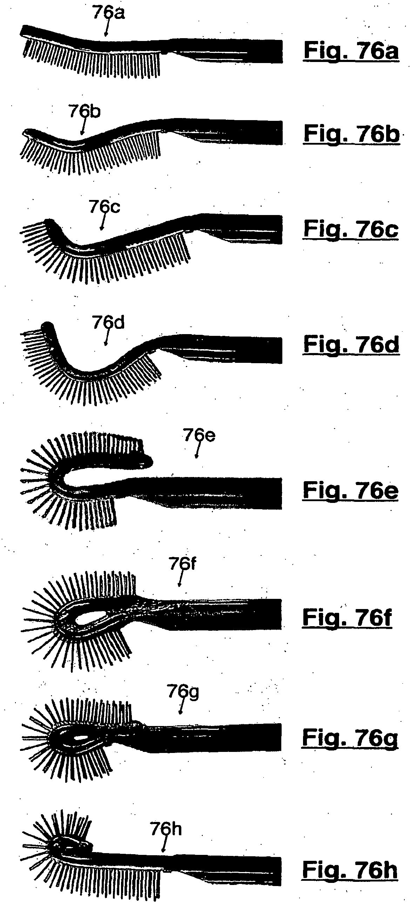

Sur les figures 71 a à 76h, sont illustrées respectivement des variantes de dispositifs de brossage et de peignage (les dispositifs portent les mêmes signes de référence que les figures correspondantes):
- à rangées de poils R_{I} de hauteur variant linéairement ; dispositifs 71a et 71b;
- à rangées de poils R1_{b} à R4_{b} ayant subi une opération de brûlage : dispositifs de brossage et de peignage respectivement 72a à 72d;
- à rangée de poils Rₑ ayant subi une opération d'effilage : dispositif 73 ;
- à support ayant subi une opération de pliage angulaire : dispositif de brossage et de peignage 74 ;
- à supports ayant subi des opérations de courbure : dispositifs 75a à 75d , et
- à supports ayant subi des opérations de courbure de diverses amplitudes pouvant aller jusqu'au repliement (figures 76e à 76h) : dispositifs 76a à 76h.

L'invention n'est pas limitée aux exemples de réalisation décrits et représentés. Il est possible par exemple de prévoir des dispositifs à supports multiples ou dont le ou les supports présentent des séries de rangées disposées aux extrémités ou en position intermédiaire. Par ailleurs, les dispositifs réalisés par un procédé selon l'invention peuvent être adaptés pour des applications dans un grand nombre de domaines : médical , mécanique, décoration, accessoire vestimentaire, etc.

Egalement selon des modes de réalisation particuliers de ce dispositif de brossage ou de peignage:
- les poils constituant une rangée présente une longueur de portion principale sensiblement différente de celle des poils adjacents de la même rangée, de sorte que les extrémités libres des poils sont inscrits sur une pente inclinée ou une courbe ;
- plusieurs rangées de poils sont disposées parallèlement entre elles pour former au moins un groupe de rangées, l'ensemble des extrémités libres des poils formant un motif géométriquement régulier ;
- au moins une rangée a des poils présentant une portion principale de longueur plus importante que celle des poils des rangées de sorte que les extrémités libres de cette rangée surpassent celles des autres rangées ;
- au moins un groupe constitué d'au moins une rangée de poils est disposé de part et d'autre du support ;
- plusieurs rangées de poils ou groupes de rangées sont disposés radialement autour d'un support de forme allongée ;
- le support de la pluralité de poils est solidaire d'un organe de préhension choisi parmi une poignée, un manche et une tige ;
- l'organe de préhension est raccordé au support parallèlement audit support ;
- l'organe de préhension est raccordé au support perpendiculairement audit support.

## Revendications

1. Outillage pour injection de matière plastique apte à produire un dispositif de brossage ou de peignage moulé par injection de matière plastique comportant une pluralité de poils sur un support, disposés selon des motifs géométriquement réguliers, chaque poil ayant une embase rattachée au support, une portion principale flexible s'étendant sur un axe longitudinal (XX') sensiblement orthogonal à la surface du support en son point d'ancrage, et une extrémité libre, la majorité des poils (1x) présentant :
- une portion principale(21) géométriquement définie par une évolution de génératrice droite (g, g') autour de l'axe longitudinal (XX'), la distance entre la génératrice et cet axe (XX') étant en tout point inférieure à 0,5 mm et l(angle (α) entre la génératrice et l'axe longitudinal (XX') étant inférieure à 2° en toute position autour dudit axe (XX'),
- une extrémité libre (20) définie par une surface transversale coupant l'axe longitudinal (XX') de la portion principale (21), et
- une longueur totale (l) comprise entre 1,5 et 15mm,
ledit outillage comportant au moins un pavé dans lequel sont creusées des cavités aptes à mouler une pluralité de poils, **caractérisé en ce que** :
- le pavé (200) étant constitué de plusieurs plaques d'acier (212) assemblées de façon permanente pendant l'utilisation du moule, et démontable périodiquement,
- le pavé (200), comportant au moins une rangée de cavités (226b) destinées chacune à former la portion principale d'un poil, usiné de part et d'autre de la surface séparant deux plaques adjacentes (212a, 212b),
- un élément d'obturation (224a à 224c), en forme de plaque ou de barre, est disposé à l'extrémité d'au moins une rangée de cavités (226), pour former la surface d'extrémité libre (20) des poils, **caractérisé en ce que** :
- un espace d'épaisseur calibrée, entre sensiblement 0,005 mm et 0,050 mm, est ménagé entre les plaques (226b) formant la portion principale du poil et la plaque ou barre (224a, 224b) formant la surface d'extrémité libre du poil, de façon à laisser échapper l'air présent dans la cavité au moment de l'injection tout en évitant la fuite du plastique.
- un mécanisme d'éjection (223a, 223b) est prévu pour extraire le dispositif de la cavité après solidification de la matière plastique en exerçant une poussée sur le support parallèlement à l'axe principal d'au moins une partie de la pluralité de poils.

2. Outillage selon la revendication 1, **caractérisé en ce que** l'acier constituant les plaques du pavé présente une dureté élevée, égale ou supérieure à 50 HRc après traitement thermique et **en ce que** l'usinage des plaques est effectué principalement par électroérosion filaire.

3. Outillage selon la revendication 2, **caractérisé en ce qu'**au moins une rangée de cavités (202) est usinée par découpe filaire à travers un même bloc d'acier (201) qui est ensuite tranché de façon à obtenir au moins deux plaques, assemblées ultérieurement.

4. Outillage selon la revendication 1, **caractérisé en ce qu'**au moins un pavé est intégré dans une carcasse d'acier comportant des parties moulantes complémentaires à celles du pavé pour former un dispositif complet avec un support (2), une tige ou une poignée (3), et **en ce qu'**il comporte un système d'éjection constitué d'au moins un poussoir (223a, 223b) situé en bordure d'une rangée de poils.

5. Procéder pour réaliser un dispositif de brossage ou peignage moulé par injection de matière plastique comportant une pluralité de poils sur un support, disposés selon des motifs géométriquement réguliers, chaque poils ayant une embase rattachée au support, une portion principale flexible s'étendant sur un axe longitudinal (XX') sensiblement orthogonal à la surface du support en son point d'ancrage, et une extrémité libre, la majorité des poils (1x)présentant :
- une portion principale (21) géométriquement définie par une évolution de génératrice droite (g, g') autour de l'axe longitudinal (XX'), la distance entre la génératrice et cet axe (XX') étant en tout point inférieure à 0,5 mm et l'angle (α) entre la génératrice et l'axe longitudinal (XX') étant inférieure à 2 deg. En toute position autour dudit axe (XX'),
- une extrémité libre (20) définie par une surface transversale coupant l'axe longitudinal (XX') de la portion principale (21), et
- une longueur totale (l) comprise entre 1,5 et 15mm ;
ledit procédé mettant en oeuvre un outillage selon l'une quelconque des revendications 1 à 4, **caractérisé en ce qu'**il comporte les étapes suivantes :
- moulage par injection de matière dans ladite au moins une rangée de cavités (226b) du pavé, et
- extraction du dispositif de la cavité avec le mécanisme d'éjection (223a, 223b).

6. Procédé selon la revendication 5, **caractérisé en ce que**, après l'étape de démoulage, ladite pluralité de poils dudit dispositif de brossage subit au moins une opération d'effilage.

7. Procédé selon la revendication 6, **caractérisé en ce que** ladite opération d'effilage consiste à enlever de la matière sur le côté de la portion principale d'au moins une partie des poils, de façon progressive pour former une pointe à l'extrémité libre de ces poils.

8. Procédé selon la revendication 7, **caractérisé en ce que** la matière est enlevée mécaniquement par frottement des poils sur une surface abrasive, un disque (402), une meule (400) ou une bande (401) en exerçant un effort suffisant entre l'abrasif et les poils pour les fléchir progressivement dans au moins une direction et ainsi exposer une partie de la portion principale (21) à l'enlèvement de matière.

9. Procédé selon la revendication 7, **caractérisé en ce que** la matière est enlevée chimiquement par trempage de l'extrémité d'au moins une partie des poils dans un solvant liquide (501) apte à dissoudre la matière plastique constituant lesdits poils, pendant un temps suffisant à l'obtention d'une pointe fine et progressive, le trempage étant suivi d'une opération de rinçage pour neutraliser les effets chimiques du solvant.

10. Procédé selon l'une des revendications de 5 à 9, consistant à exposer l'extrémité d'au moins une partie des poils à une source de chaleur vive (510, 520, 530) choisie entre une flamme directe, un soufflage d'air chaud et un panneau générateur de rayons infrarouges, jusqu'à la fusion locale de la matière thermoplastique et formation d'un embout à l'extrémité de chaque poil.

11. Procédé selon l'une des revendications de 5 à 10, **caractérisé en ce qu'**il comporte une étape de courbure consistant à pincer le support de la pluralité de poils entre deux mâchoires de façon à le plier au-delà de sa limite élastique et conserver ainsi une déformation résiduelle.

12. Procédé selon la revendication 11, **caractérisé en ce que** l'opération de pincement est effectuée avec apport d'énergie thermique sur les mâchoires.

13. Procédé selon la revendication 11, **caractérisé en ce que** l'opération de pincement est effectuée avec apport d'énergie ultrasonores sur les mâchoires).

## Patentansprüche

1. Spritzgusswerkzeug, das in der Lage ist, durch Einspritzung eines Kunststoffes eine geformte Bürst- oder Kämmvorrichtungen herzustellen, welche eine Vielzahl von, in regelmäßigen geometrischen Mustern angeordnete Borsten an einer Halterung umfasst, wobei jede Borste eine mit der Halterung verbundene Basis, einen biegsamen Hauptabschnitt, der sich über eine im Wesentlichen rechtwinklig zur Halterungsfläche im Verankerungspunkt verlaufende Längsachse (XX') erstreckt, und ein freies Ende aufweist, wobei die meisten Borsten (1x) folgendes umfassen:
- einen Hauptabschnitt (21), der geometrisch durch den Verlauf einer geraden Mantellinie (g, g') um eine Längsachse (XX') definiert wird, wobei die Entfernung zwischen der Mantellinie und dieser Achse (XX') an jeder Stelle kleiner als 0,5 mm und der Winkel (α) zwischen Mantellinie und Längsachse (XX') an besagter Achse (XX') in jeder Position kleiner als 2° ist.
- ein freies Ende (20), das durch eine quer verlaufende Fläche, welche die Längsachse (XX') des Hauptabschnitts (21) schneidet, definiert wird, und
- eine Gesamtlänge (i), die zwischen 1,5 und 15 mm liegt,
wobei besagtes Werkzeug mindestens einen Block mit Hohlräumen enthält, welche eine Vielzahl an Borsten formen können, und
- der Block (200) aus mehreren Stahlplatten (212) besteht, die während der Benutzung der Form dauerhaft aneinandergefügt sind und zeitweilig demontierbar sind,
- der Block (200) mindestens eine Reihe Hohlräume (226b) enthält, die jeweils dazu bestimmt sind, den Hauptabschnitt einer Borste zu formen, und zu beiden Seiten der Fläche, welche zwei aneinander grenzende Platten (212a, 212b) voneinander trennt, bearbeitet sind,
- ein Verschlusselement (224a bis 224c) in Form einer Platte oder einer Stange am Ende von mindestens einer Reihe Hohlräume (226) angeordnet ist, um die Fläche des freien Endes (20) der Borsten zu bilden, **dadurch gekennzeichnet, dass**:
- ein kalibrierter Bereich mit einer Stärke von im Wesentlichen 0,005 mm bis 0,050 mm zwischen den Platten (226b), welche den Hauptabschnitt der Borste formen, und der Platte oder Stange (224a, 224b), welche die Fläche des freien Endes der Borste formt, eingearbeitet ist, so dass die Luft, die im Hohlraum zum Zeitpunkt der Einspritzung enthalten ist, entweicht und gleichzeitig das Lecken des Kunststoffes vermieden wird,
- ein Auswurfmechanismus (223a, 223b) vorgesehen ist, um die Vorrichtung nach der Verfestigung des Kunststoffes durch Schubkrafteinwirkung auf die Halterung parallel zur Hauptachse von mindestens einem Teil der vielen Borsten zu extrahieren.

2. Werkzeug nach Anspruch 1, **dadurch gekennzeichnet, dass** der Stahl, welcher die Platten des Blocks bildet, eine erhöhte Härte aufweist, die nach der thermischen Behandlung größer/gleich 50 HRc ist, und darin, dass die Bearbeitung der Platten hauptsächlich durch Drahterosion erfolgt.

3. Werkzeug nach Anspruch 2, **dadurch gekennzeichnet, dass** mindestens eine Reihe Hohlräume (202) durch Drahtschneiden ein und desselben Stahlblocks (201), welcher anschließend in mindestens zwei Platten geschnitten wird, die zu einem späteren Zeitpunkt aneinander gefügt werden, bearbeitet wird.

4. Werkzeug nach Anspruch 1, **dadurch gekennzeichnet, dass** mindestens ein Block in eine Stahlkarkasse integriert wird, welche zusätzlich zu den Teilen des Blocks weitere formende Teile enthält, um eine vollständige Vorrichtung mit einer Halterung (2), einem Stiel oder einem Griff (3) zu formen, und darin, dass es ein Auswurfsystem enthält, das mindestens aus einem Ausstoßer (223a, 223b) am Rande einer Borstenreihe besteht.

5. Spritzgießverfahren zur Herstellung einer geformten Bürst- oder Kämmvorrichtung durch Einspritzung eines Kunststoffes, welche eine Vielzahl von, in regelmäßigen geometrischen Mustern angeordnete Borsten an einer Halterung umfasst, wobei jede Borste eine mit der Halterung verbundene Basis, einen biegsamen Hauptabschnitt, der sich über eine im Wesentlichen rechtwinklig zur Halterungsfläche im Verankerungspunkt verlaufende Längsachse (XX') erstreckt, und ein freies Ende aufweist, wobei die meisten Borsten (1x) folgendes umfassen:
- einen Hauptabschnitt (21), der geometrisch durch den Verlauf einer geraden Mantellinie (g, g') um eine Längsachse (XX') definiert wird, wobei die Entfernung zwischen der Mantellinie und dieser Achse (XX') an jeder Stelle kleiner als 0,5 mm ist, und der Winkel (α) zwischen Mantellinie und Längsachse (XX') in jeder Position an besagter Achse (XX') kleiner als 2° ist.
- ein freies Ende (20), das durch eine quer verlaufende, die Längsachse (XX') des Hauptabschnitts (21) schneidende Fläche definiert wird,
- eine Gesamtlänge (1) zwischen 1,5 und 15 mm;
wobei bei besagtem Verfahren ein Werkzeug nach einem der Ansprüche 1 bis 4 eingesetzt wird, **dadurch gekennzeichnet, dass** es folgende Schritte umfasst:
- Spritzgießen in mindestens eine Reihe Hohlräume (226b) des Blocks, und
- Extraktion der Vorrichtung aus dem Hohlraum mittels des Auswurfmechanismus (223a, 223b).

6. Verfahren nach Anspruch 5, **dadurch gekennzeichnet, dass** besagte Vielzahl von Borsten besagter Bürstvorrichtung mindestens eine Borstenausdünnung durchläuft.

7. Verfahren nach Anspruch 6, **dadurch gekennzeichnet, dass** besagte Borstenausdünnung darin besteht, dass an der Seite des Hauptabschnitts mindestens eines Teils der Borsten nach und nach Material beseitigt wird, so dass zum freien Ende dieser Borsten hin eine Spitze geformt wird.

8. Verfahren nach Anspruch 7, **dadurch gekennzeichnet, dass** das Material mechanisch durch Reibung der Borsten an einer scheuernden Fläche, wie z.B. einer Scheibe (402), einem Schleifstein (400) oder einem Streifen (401) entfernt wird, wobei ausreichend Kraft auf die scheuernde Fläche und die Borsten ausgeübt werden muss, um sie nach und nach in mindestens eine Richtung zu biegen und somit einen Teil des Hauptabschnittes (21) der Materialentfernung zu unterziehen.

9. Verfahren nach Anspruch 7, **dadurch gekennzeichnet, dass** das Material durch Eintauchen des Endes von mindestens einem Teil der Borsten in ein flüssiges Lösungsmittel (501), das in der Lage ist, den Kunststoff, aus welchem besagte Borsten bestehen, aufzulösen, chemisch beseitig wird, wobei die Dauer des Eintauchens ausreichen muss, um eine dünne, sich verjüngende Spitze zu erhalten, und auf das Eintauchen ein Spülvorgang zur Neutralisierung der chemischen Wirkungen des Lösungsmittels folgt.

10. Verfahren nach einem der Ansprüche 5 bis 9, **dadurch gekennzeichnet, dass** das Ende von mindestens einem Teil der Borsten einer heißen Wärmequelle (510, 520, 530) ausgesetzt wird, die aus einer direkten Flamme, einem Heißluftgebläse und einem Infrarotgenerator ausgewählt wird, und zwar so lange, bis das thermoplastische Material geschmolzen ist und sich am Ende einer jeden Borste ein Endstück bildet.

11. Verfahren nach einem der Ansprüche 5 bis 10, **dadurch gekennzeichnet, dass** es eine Phase der Biegung umfasst, die darin besteht, die Halterung der Vielzahl von Borsten so zwischen zwei Backen einzuklemmen, dass sie sich über die Elastizitätsgrenze hinaus biegen und somit eine bleibende Verformung durchlaufen.

12. Verfahren nach Anspruch 11, **dadurch gekennzeichnet, dass** der Klemmvorgang mit einer, auf die Backen einwirkenden thermischen Energiezufuhr erfolgt.

13. Verfahren nach Anspruch 11, **dadurch gekennzeichnet, dass** der Klemmvorgang mit einer, auf die Backen einwirkenden Ultraschallenergiezufuhr erfolgt.

## Claims

1. A plastic-injection tool capable of producing a brushing or combing device molded by plastic injection comprising a plurality of bristles on a support, disposed according to geometrically regular patterns, each bristle having a base attached to the support, a flexible main portion extending on a longitudinal axis (XX') substantially orthogonal to the surface of the support at its anchorage point, and a free end, with the majority of bristles (1x) further comprising:
- a main portion (21) defined geometrically by travel of a straight generator (g, g') around the longitudinal axis (XX'), the distance between the generator and this axis (XX') being at any point less than 0.5mm and the angle (α) between the generator and the longitudinal axis (XX') being less than 2° at any position around said axis (XX');
- a free end (20) defined by a transverse surface intersecting the longitudinal axis (XX') of the main portion (21); and
- a total length (1) lying between 1.5 and 15mm,
with said tool comprising at least one block assembly in which cavities capable of molding a plurality of bristles are hollowed out,
- the block assembly (200) comprising several steel plates (212) which are assembled permanently during use of the mold and able to be dismantled periodically,
- the block assembly (200) comprising at least one row of cavities (226b) each intended to form the main portion of a bristle, machined on either side of the surface separating two adjacent plates (212a, 212b),
- a closing-up element (224a to 224c) in the form of a plate or a bar, is disposed at the end of at least one row of cavities (226b), in order to form the free end surface (20) of the bristles,
**characterized in that**
- a space of calibrated thickness, of between substantially 0.005 and 0.050mm, is made between the plates (226) forming the main portion of the bristle and the plate or the bar (224a, 224b) forming the free end surface of the bristle, so as to allow the air present in the cavity to escape at the time of the injection whilst avoiding leakage of plastic,
- an ejection mechanism (223a, 223b) is provided for extracting the device from the cavity after solidification of the plastic by exerting pressure on the support parallel to the main axis of at least some of the plurality of bristles.

2. A tool as claimed in claim 1, **characterized in that** the steel constituting the plates of the block assembly has great hardness, equal to or greater than 50HRc after heat treatment, and wherein the machining of the plates is performed mainly by wire spark erosion.

3. A tool as claimed in claim 2, **characterized in that** at least one row of cavities (202) is machined by wire cutting through the same block of steel (201) which is then sliced so as to obtain at least two plates, subsequently assembled.

4. A tool as claimed in claim 1, **characterized in that** at least one block assembly is integrated in a steel casing comprising molding parts complementary to those of the block assembly in order to form a complete device with a support (2), a rod or a handle (3), and **in that** it comprises an ejection system consisting of at least one pushing device (223a, 223b) situated along the edge of a row of bristles.

5. A method for producing a brushing or combing device molded by plastic injection comprising a plurality of bristles on a support, disposed according to geometrically regular patterns, with each bristle having a base attached to the support, a flexible main portion extending on a longitudinal axis (XX') substantially orthogonal to the surface of the support at its anchorage point, and a free end, with the majority of bristles (1x) comprising:
- a main portion (21) defined geometrically by travel of a straight generator (g, g') around the longitudinal axis (XX'), with the distance between the generator and this axis (XX') being at any point less than 0.5mm and the angle (α) between the generator and the longitudinal axis (XX') being less than 2° at any position around said axis (XX');
- a free end (20) defined by a transverse surface intersecting the longitudinal axis (XX') of the main portion (21); and
- a total length (1) lying between 1.5 and 15mm,
with said method using tools according to any one of claims 1 to 4, **characterized in that** it comprises the following steps:
- molding by injecting material into said at least one row of cavities (226b) of the block assembly, and extraction of the device from the cavity, using the ejection mechanism (223a, 223b).

6. A method according to claim 5, **characterized in that**, after the step of stripping, said plurality of bristles of said brushing device undergoes at least one tapering operation.

7. A method according to claim 6, **characterized in that** said tapering operation comprises removing material from a side of the main portion of at least some bristles, progressively in order to form a point at the free end of these bristles.

8. A method according to claim 7, **characterized in that** the material is removed mechanically by rubbing the bristles on an abrasive surface, a disk (402), an abrasive wheel (400) or a band (401), while exerting sufficient force between the abrasive and the bristles in order to bend them progressively in at least one direction and thus to expose a part of the main portion to the removal of material.

9. A method according to claim 7, **characterized in that** the material is removed chemically by dipping the end of at least some of the bristles in a liquid solvent (501) capable of dissolving the plastic constituting said bristles, for a time sufficient to obtain a fine and progressive point, the dipping being followed by a rinsing operation in order to neutralize the chemical effects of the solvent.

10. A method according to one of claims 5 to 9, comprising exposing an end of at least some bristles to an intense heat source (510, 520, 530) chosen from amongst a direct flame, blowing of hot air and an infrared radiation generator panel, until there is local melting of the thermoplastic material and formation of a tip at the end of each bristle.

11. A method according to one of claims 5 to 10, **characterized in that** it comprises a step of curving comprising gripping a support of a plurality of bristles between two jaws so as to bend it beyond its elastic limit and thus retain a residual deformation.

12. A method according to claim 11, **characterized in that** the gripping operation is performed with a supply of thermal energy to the jaws.

13. A method according to claim 11, **characterized in that** the gripping operation is performed with a supply of ultrasound energy to the jaws.
